(19) Europäisches Patentamt / European Patent Office / Office européen des brevets

(11) **EP 3 896 046 A1**

(12) **EUROPEAN PATENT APPLICATION**

(43) Date of publication:
**20.10.2021 Bulletin 2021/42**

(21) Application number: **21169011.0**

(22) Date of filing: **16.04.2021**

(51) Int Cl.:
*C04B 28/06* (2006.01)  *C04B 111/28* (2006.01)
*C04B 28/14* (2006.01)  *E04B 1/94* (2006.01)
*E04B 2/74* (2006.01)  *E06B 3/263* (2006.01)
*E06B 5/16* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.04.2020 PL 43356620**

(71) Applicant: **Hydro Building Systems Poland Sp. z o.o.**
**92-620 Lódz (PL)**

(72) Inventors:
• **Sodol, Konrad Andrzej**
 **93-219 Lódz (PL)**
• **Kaczmarek, Lukasz**
 **95-050 Konstantynów Lódzki (PL)**

(74) Representative: **Patpol Kancelaria Patentowa Sp. z o.o.**
**Nowoursynowska 162J**
**02-776 Warszawa (PL)**

(54) **DRY CEMENT-BASED CERAMIC COMPOSITION FOR PREPARING A COOLING MATERIAL FOR REINFORCEMENT INSERT OR FILLING OF ALUMINUM SYSTEMS, REINFORCEMENT FILLING FOR ALUMINUM SYSTEMS COMPRISING IT, METHOD OF PROVIDING FIRE PROTECTION OF ALUMINUM SYSTEM AND USE OF DRY CEMENT-BASED CERAMIC COMPOSITION FOR PREPARING REINFORCEMENT FILLING OR INSERT**

(57)    Present invention relates to dry cement-based ceramic composition for preparing a cooling material for reinforcement filling or insert for aluminum systems, comprising:
- cement binder in the amount of not less than 15% by weight of the total dry composition, and additives such as aggregates in the amount of not more than 85% by weight of the total dry composition and
- other additives such as fibres, micronized silica, gypsum, air entrainer, processing aid, foaming agents in the total amount of not more than 5% by weight of the total dry composition with proviso, that the total amount of all additives is not higher than 85% by weight of the total dry composition

in which cement binder comprises Cement Binder type A and Cement Binder type B which is Calcium Sulfoaluminate Cement (CSA), wherein the content of Cement Binder type A is in range from 0 to 75% of the total cement binder present in the composition and the content of Calcium Sulfoaluminate Cement is in range from 25% to 100% of the total cement binder present in the composition.

Furthermore, present invention relates to the use of such composition for preparing reinforcement filling or insert, a reinforcement filling for aluminum systems made with use of such composition as well a method of providing fire protection for an aluminum system using such composition.

Fig. 12

EP 3 896 046 A1

## Description

### Technical field

The present invention relates to a dry cement-based ceramic composition for preparing a cooling material for reinforcement flood of aluminum systems, a reinforcement flood for aluminum systems comprising thereof, method of providing fire protection of aluminum system by introducing into aluminum profiles of such system cooling filling prepared from the dry cement-based ceramic composition and the use of the dry cement-based ceramic composition according to present invention for preparing reinforcement flood or insert. Such cooling filling prepared from the dry cement-based ceramic composition inserted or flooded into the fire-resistance aluminum systems provides better fire resistance properties of aluminum structures made of aluminum components comprising such cooling element, in particular made of aluminum profiles filled with such a cooling composition. The composition is useful in many applications in different building structures, where fire-resistance is required. Such aluminum systems comprising the cooling filling composition might be present, as for example, in facades, roofs, doors, windows, partitions providing a fire-barrier.

### State of the art

The partitions, floors, ceilings, roofs and other structural components of conventionally constructed buildings are very often the weakest elements of building structures when exposed to very high temperatures due to their unsatisfactory resistance to fire. Consequently, when a fire occurs in a building, it spreads very quickly and pose a dangerous threat to the lives of all occupants remaining in the buildings.

Therefore, there is a continuous need for improvement of all such structural elements, as for example windows, doors or roofs, that have an increased fire resistance. Typically, to strengthen such fire proof structural elements some metal profiles are used. Commonly used in the construction industry for the production of structural elements metals are steel and aluminum. Each of these two metals has its own unique properties. This differences between aluminum and steel profiles determine the selection of one of them for specific purposes and applications. For example, steel is characterized by very high resistance to damage. The second most important advantage of this material is its high resistance as well to corrosion as to very high temperatures. These features make the steel profiles are wildly used both in the structures inside and outside the buildings. Nevertheless, during the last decades aluminum profiles have become a subject of increased interest [Davor S., *Behaviour of aluminum structures in fire,* Lightweight materials, such as aluminum alloys, offer the construction industry an opportunity to design and manufacture high performance of structural elements that are safe and much lighter than traditional, especially those made of steel or other metals. Advantage of these energy-efficient and environmentally friendly aluminum systems against other metal systems can be attributed not only to their lightness but also to versatility of profiles shapes that are able to be produced, high corrosion resistance of such structural elements based on aluminum, ease of its maintenance and first of all their high structural efficiency (large strength to specific weight ratio). is light-weight. Disadvantages are a low melting point of aluminum and strength loss under high temperature. Increased temperature on aluminum systems decreases the strength of aluminum profiles. For some buildings, steel or other metal systems, as for example aluminum systems have to meet the special requirements of fire-resistance protection. It is of the greatest important especially in high-buildings like sky-scrapers or the public buildings like law courts, hospitals, government offices, schools, sports halls etc. During fire internal or external exposure metal systems need to meet appropriate law regulations. The behaviour of temperatures is described by a standard curve (internal), external curve, hydrocarbon curve, tunnel curve etc. However, the structural elements that are made of aluminum do not possess very high resistance to high temperatures since such aluminum profiles lose their loadbearing abilities in the higher temperatures caused by a fire and start melting. Generally, aluminum alloys have a high thermal conductivity and low melting temperature, usually between 580 °C and 650 °C but the strength of aluminum reduces already at moderately elevated temperatures (roughly between 175 °C and 350 °C) [Maljaars et al., "Aluminum structures exposed to fire conditions - on overview", HERON, 2010, vol. 55, p. 85]. Actual mechanical material properties at elevated temperature depend on the type of alloy and temperature, but generally, strength and stiffness of aluminum alloys are reduced significantly at moderately elevated temperatures. At a temperature of 350 °C, the strength is reduced already to 30% [Maljaars et al., "Fire exposed aluminum structures", HERON, 2005, vol. 50, p. 261]. These are the main reasons why aluminum profiles and aluminum structures are relatively sensitive to fire exposure. For potential application of aluminum systems the crucial test is standard temperature curve according to PN-EN 1363-1 standard. Meeting such requirements of standard test means to reach a specified time of the aluminum system exposed on fire. Therefore, many attempts have been undertaken in the area of enhancing aluminum construction resistance against the fire so, as they meet appropriate law regulations.

On one hand such fire-resistance of aluminum elements might be achieved by designing the additional supporting components providing fallback loadbearing abilities to aluminum profiles when they start to melt.

On the other hand, to protect the loadbearing of aluminum systems and increase the fire-resistance might be achieved by additional protecting said aluminum profiles by introducing into such aluminum profiles an additional material, a filling, that provides supplementary thermal barrier so, as to retard melting process of aluminum profiles. The role of such additional filing material might be, for example, to reinforce aluminum systems, to increase the total heat capacity of systems, to add material exhibiting cooling properties or to use combination of the above presented techniques.

What is important, the additional material used must meet requirements of high strength and thermal insulation under normal exploitation conditions as an elevated temperature requires by specified fire-resistance standard. During the fire, after the complete melt of aluminum profiles, such additional filling present in the aluminum profiles has to accept not only a glass unit loads, but also additional load resulting from unequal deflection of the whole constructions.

There is no typical insulation-cooling material dedicated for flooding the aluminum systems bar to protect against high temperature. Generally, the greatest part of prior art inventions are dedicated to another application than aluminum systems.

For example, US520123 discloses as a cooling material and insulation infills in profile chambers gypsum board. In the composition as disclosed herein any lime cement or similar one can be used in combination with fine sand as filler. The advantage of material and the process of its preparation as disclosed in U S520123 is low-cost and high availability. The main mechanism of cooling provided by gypsum based composition relies on endothermic reaction taking place under a high temperature where dehydration of gypsum occurs. The reaction occurs according to the following equation:

$$CaSO_4 \cdot 2H_2O \xrightarrow{110-130°C} CaSO_4 \cdot \frac{1}{2}H_2O \xrightarrow{130-200°C} CaSO_4$$

On the other hand, subsequent patent publication US6139620 discloses calcium silicate board with constitutes high-class insulation material used in aluminum systems. Its high gravity, which average 0,5-0,8 tones per $m^3$ assures its good thermal properties even under 1000 Celsius degrees. Disclosed in the publication material comprise 5-30% wt. of calcium silicate hydrate slurry, 17-50% wt. of calcareous material (e.g. calcium hydroxide and quicklime),13-45% wt. of silica containing material (e.g. silica sand, sintered diatomaceous earth, silicon dust, fly ash, white carbon, zeolite, montmoryllonite), 2-8% wt. of fibre material (e.g. cellulose fibres, PP, vinylon, glass fibres, carbon fibres) and 5-40% wt. of inorganic fillers (e.g. perlite, wollastonite, mica, talc, calcium carbonate and gypsum). The process of manufacture of such calcium silicate board is a hydrothermal reaction in the pressure container.

Next patent application EP1326811 discloses fire protection material for constructions of concrete and prestressed concrete, especially for tunnels, in the form of prefabricated plates or sprayed-on and cured coatings, prepared from a hydraulically curing composition containing from 50 to 200 weight parts of aluminous cement and from 10 to 250 weight parts of xonotlite in the uncured state, wherein the xonotlite being in the form of felted globules aluminous cement and less than 5% by weight of ettringite. The cement is according to disclosed invention aluminate cement, but might be optionally replaced by OPC cement. The material shows good performance under high-temperature. The set material has the characteristic of gradual dehydration that occurs mainly in the temperature range between 70 and 450 ° C and thus is able to absorb heat step by step and to reduce the increase of the temperature in the area between the surface and the surface to be protected. The combination of the xonotlite with the high-alumina cement guarantees the required optimum endothermic and insulating properties. The xonotlite dehydrates only at about 800 ° C and passes into wollastonite. This dehydration is a strong endothermic reaction and consumes a lot of energy. The resulting wollastonite has a theoretical melting point at 1530 ° C. The fire protection and insulation thus make use of various phase transitions and the dehydration of the set alumina cement and the xonotlite while maintaining the spatial structure and the mechanical stability. The disadvantage is high-cost of aluminate cement, high-energy consumption and low-available of high purity raw materials mean by a good source of quality vermiculite asbestos free.

In publication CN101863640 environmentally friendly coloured tunnel fireproof coating is disclosed. The composition as described herein comprises following components and parts by mass: 10-50 parts of cement, 40-90 parts of expanded perlite, expanded vermiculite and light calcium carbonate, 1-10 parts of inorganic mineral fibre, and 5-30 parts of flame-retardant system, 0.1 to 5.0 parts of rubber powder, 0.5 to 3.0 parts of water reducing agent, air entraining agent and expansion agent, and 0.5 to 2.0 parts of inorganic pigment. The cement used in the composition according to CN101863640 is ordinary Portland Cement (OPC) or fast-hard Sulphur aluminate cement. This composition has the characteristics of fire resistance limit, high bonding strength, and good water resistance that makes it useful to be used as coloured tunnel fireproof coating. This material is intended to be stable up to 1100°C. Nevertheless publication is silent about any parameters of such composition, which could determine its usefulness as a material for filling profiles, in particular, about its high resistance to high temperatures or flowability or cure profile.

Additionally, on the market is commercially available from Promat such composition as disclosed in CN101863640 of fire protection mortar that provides stability in 1250 degree of Celsius and passes fire-resistance standards of Rf RWS. Its qualitative and quantitative composition is presented in Table 1 below.

Table 1. Composition of fire protection mortar as defined in CN101863640

| Amount | Unit | Type |
|--------|------|------|
| 45-70 | % wt. | Cement binder |
| 8-20 | % wt. | Calcite |
| 8-20 | % wt. | Mica |
| 0-5 | % wt. | Xonotlite |
| 0.1-20 | % wt. | Expanded perlite |
| 0.1-10 | % wt. | Fibres |
| 0.01-2 | % wt. | Air entrained and foaming agent |
| 0.01-4 | % wt. | Processing aids |

Cement binder in such composition can be preferably chosen from CEM I, CEM II, CEM III, CEM IV, CEM V (in according to EN 197-1 standard) and combinations thereof, but is possible to use aluminate cement as well. Suggested average particle size ranges up to 200 nm. Nevertheless, this mortar composition is designed to protect the facade of buildings and none of the available sources allow to claim whether, and to what extent, it meets the requirements for a composition intended to fill an aluminum profile as fire-protective, but also supportive filler.

As useful for filling of aluminum profiles only such materials should be taken into consideration which are not only easy to manipulate and can fill the internal spaces of the profiles entirely but also provide so required strength at elevated temperatures that ensures mandatory resistance against the fire.

One of the materials proposed to be used as aluminum profiles filling is light weight concrete or other light cementitious materials of concrete type. For example, Kantautas A. et al. disclose the refractory filler compositions of Portland cement (OPC) mixture suitable for aluminum structures having low flammability, smoke emission, degradation of mechanical properties during temperature increase that [Kantautas A. et al., "Composite Portland cement material for the filling of aluminum structures profiles", conference materials available on https://www.researchaate.net/publication/282001822] As it is underlined in this publication Portland cement mixtures *"are likely to change their volume despite their good mechanical properties after high-temperature processing. This is related to chemically bound water located in Portland cement stone. This water is released from the stone in case of sudden temperature changes, thus creating a porous structure and the sample shrinkage."* Nevertheless, some composition of OPC with zeolitized perlite were found to be promising, since after melting of aluminum walls loaded by such filling profiles absorb the load of the whole construction. As suitable composition that fully satisfies the requirements for filling profile was proposed mixture comprising 90% of OPC in combination with 10% of zeolitized perlite. Nevertheless, such mixture has relatively high density (mixtures have high density (about 1650 kg/m$^3$) and therefore is not easy to operate.

Also other compositions based on OPC have been proposed. For example, there are some disclosures that cementitious composites comprising blast furnace slag cooled by air were found to have satisfactory properties with respect to compressive strength [Shoaib, M.M. et al., "Effect of fire and cooling mode on the properties of slag mortars", Cement and Concrete Research, 31 (2001), p. 1533-1538]. Nevertheless, the weak strength of such concrete or similar cementitious material in tension compromises its compressive strength.

Moreover, some concrete compositions based on OPC have been proposed as fillers of stainless steel and aluminum tubular columns. Such concrete-filled aluminum tube columns can effectively take advantages of these two materials to provide both high strength and high stiffness. In case of a filler based on ordinary OPC of a water/cement ratio of 0.6 [Kadhim N., "Structural Behavior of Concrete Filled Aluminum Tubular Columns", Basrah Journal for Engineering Science, 4 (2012), p. 46-59] it has been shown that it has high compressive strength, but there is no information about its resilience to load. With that respect it has to be noted, that the main role of the concrete core in the composite column is not provide sufficient support of the construction made of aluminum structures in fire, but to resist compressive forces and to reduce the potential for buckling of the steel member. Moreover, such concrete is not very easy to be introduced into aluminum profiles of more complicated structure than tubular columns. In particular, it is difficult to accurately fill a profile with a polygonal, including a rectangular polygon, cross-section, which filling would not only provide adequate reinforcement of the structure during its exposure to the fire, but would provide moderate uniform cooling over the entire surface of the aluminum profile to which it would directly adhere. Therefore, all light weight concrete compositions, also known as foam concrete compositions, are not considered to be the best filling material. What is even more, filler compositions based on OPC are generally established as not environmental friendly. Concrete, mainly based on Portland cement, is the most used material worldwide with a production of about 1.7-10$^9$ tons per year [E. Gartner, "Industrially interesting approaches to "low-CO2" cements", Cem. Concr. Res., 2004, (34), p. 1489-1498]. This production is responsible for about 5% of the total man-made $CO_2$-emissions. This problem is particularly serious in the current context of climate change and it could get even worse, since the demand for Portland cement is expected to increase in the nearest feature. For this reason there are sought alternatives to Portland cement and substitutes to known binders useful in preparation of mortars and concretes, which, opposite to OPC based products, would be green components [Coppola L. et al., "Binders alternative to Portland cement and waste management for sustainable construction", Journal of Applied Biomaterials & Functional Materials 2018, 16(3), p. 186-202] since are more environmentally friendly and help to reduce greenhouse gases emissions.

Among such alternatives alkali-activated materials, geopolymers and calcium sulfoaluminate (calcium sulphoaluminate, CSA) cements are mentioned.

Geopolymers seems to be attractive because in the process of their preparation natural and industrial silicoaluminates wastes may be used as precursors. Moreover, geopolymers usually are characterized by their high resistance both, to chemical attack and to elevated temperatures. Therefore, in some publications also composite mixtures based on geopolymer matrix were proposed as the filling of aluminum profiles [Lyon, R.E. et al., "Fire- resistant aluminosilicate composites", Fire and Materials, 21 (1997) p. 67-73]. Nevertheless, such materials are found as not promising, since strength of such mixtures is directly correlated by alkalinity and concentrations of aluminosilicate materials that results in fact that small differences in the mixture composition might result in great changes of its strength parameters. Moreover, it was also found that in case of geopolymer based mortars the modulus of elasticity is lower than in OPC mortars due to the large number of small pores that promote the formation of micro-cracks. Therefore, mortars and concretes based on geopolymers do not seem be a promising alternative building materials.

Similarly, practical use of other than geopolymers alkali-activated materials seems to be very restricted. The main reason is that microstructures, workability, strength and durability alkali activated materials and mixtures comprising thereof strongly depends on combination of activators and precursors used in the process of preparation of alkali-activated materials, especially on type of calcium-aluminosilicate precursors as used, with differing availability, reactivity, cost and value. Moreover, some shortcomings concerning durability performance, carbon footprint and efflorescence of alkali-activated materials was also reported [Pacheco-Torgal F. "Introduction to Handbook of Alkali-activated Cements, Mortars and Concretes", Handbook of Alkali-Activated Cements, Mortars and Concretes, 2015, p. 1-16]. Additionally, processing and application of alkali-activated materials in construction at presence is great challenge, since it is difficult develop effective admixtures with rheology control in these systems. Initial efforts have led to the development of organic compounds which offer some improvements in performance, but are still far from the levels of rheology achieved in Portland cement concretes [Marchon D. et al., "Molecular design of comb-shaped polycarboxylate dispersants for environmentally friendly concrete", Soft Matter, 9 (2013), p. 10719-10728]. Additional disadvantage of alkali-activated slag cement materials is that they tend to harden rather rapidly, and therefore are difficult to operate and to be introduced into aluminum profiles of different shapes.

The most promising alternative for OPC constitute calcium sulfoaluminate cements (CSA), also named as sulfoaluminate cements. One of the main phase of CSA is ye'elimite ($C_4A_3S$). The amount of ye'elimite in CSA cement usually varies from 20% to 70%. CSA cement is a sustainable cement when compared with ordinary Portland cement (OPC), since less limestone is required due to the low CaO content in ye'elimite phase [Coppola L. et al., "Binders alternative to Portland cement and waste management for sustainable construction", Journal of Applied Biomaterials & Functional Materials, 2018, 16(3), p. 186-202]. Moreover, more gypsum or anhydrite ($CaSO_4$) is consumed in the process of CSA cement production and therefore the quantity of $CO_2$ released in this process is much lower than during OPC production. CSA cement production emits 599 kg of $CO_2$ for every 1 tone produced whereas Portland production emits 798 kg of $CO_2$. The reduction is 25 % in CSA comparison to Portland. Therefore CSA is commonly known as green cement. CSA cement is calcined at 1180-1250 degree of Celsius whereas Portland is calcined at a 1500 degree of Celsius. Grinding energy is much lower in case of CSA than of OPC since CSA cement is much softer. What is more, CSA cements contain ye'elimite ($4CaO-3Al_2O_3-SO_3$) as major constituent (30-70%), but the main hydration phase of CSA cements is ettringite (tricalcium aluminate trisulphate hydrate, $C_3A-3Cs-32H$), which is able to bound the water in higher density than the density of free water remaining in the phase and exhibits a high dehydration enthalpy [Winnefeld F., "Calcium sulfoaluminate cement: on example of a low CO2 - alternative to Portland cement", Conference Paper, March 2010, available from https://www.researchgate.net/publication/311963240]. Hence, CSA cements is proposed as efficient latent heat storage system displaying a high storage energy density at relatively low temperatures and is desirable ingredient of mortar useful for the finishing of building skin. However, the use of CSA cement instead of OPC is reported as having some adversities such as overly short setting time [Coppola L. et al., "Use of tartaric acid for the production of sustainable Portland-free CSA-based mortars", Construction and Building Materials, 171 (2018) p. 243-249], low pH [Janotka I. et al, "The hydration phase and pore structure formation in the blends of sulfoaluminate-belite cement with Portland cement", Cem. Concr. Res., 2003, (33) p. 489-497], law dehydration temperatures (about 50-150°C, as hydroxy groups and water molecules are removed from the structure) or high price and the risk of expansion. As it is known, the strength of the concrete changes during annealing process. It is related to the transformations of free and chemically bound water wherein a particularly unfavorable process is the removal of chemically bound water that leads to the loss of mechanical properties of concrete [Ogrodnik P, "Eko(ogiczne betony na kruszywach odpadowych w zagadnieniach bezpieczenstwa ekip ratowniczych w warunkach pozarowych", Logistyka, 2014, (4), p. 984-994]. Therefore, limit safe temperature at which traditional, cement based on concrete can be used is 200°C. Consequently blending CSA with OPC is proposed, as the way to obtain required parameters of final cement composition, nevertheless it is rather suggested in such cement application, where loss of strength is accepted, as for example in case of mortars for external use. What is more, such blend would be also less money consuming due to relatively high cost of CSA. However, limited results are reported in the literature on the durability of concrete and mortars manufactured with CSA cement. No studies at all have been published where discussion and evaluation of mixtures of CSA with OPC be presented with respect to its desirable fire resistance and strength similar to typical concrete fillings based on ordinary OPC. As it is known, type of the cement influences compressive strength and permeability of concrete and mortar [Hager I. et al., "Effect of Cement Type on the Mechanical Behavior and Permeability of Concrete Subjected to High Temperatures", Materials, 2019, (12), p. 3021). The reference values of permeability enable to assess their potential for spalling in fire conditions, as denser and less permeable materials are prone to this behaviour. What is more, the evolution of concrete mechanical properties in fire depends on the concrete composition including the type of cement used. Therefore, simple replacement of OPC with other of cements requires selection of all composition components and reliable verification of its parameters.

Therefore, there is still a great need of modification of new compositions that would be useful as filing material of aluminum profiles. It would be desirable, that such composition provides not only required strength, fire-resistance, be easy to operate but also be environmental friendly.

## Definitions

Starter, as used in the present invention, means a mixture of water, cement binder and additives improving selected parameters of the composition in an amount not exceeding 5% of dry mixture;

Paste, as used in the present invention, means a mixture of water, cement binder in the amount equal not less than 95% of the dry mixture and additives improving selected parameters in the amount of not more than 5% of the dry mixture;

Mortar, as used in the present invention, means a mixture of water, cement binder in the amount of not less than 70% of the dry mixture and fine aggregates with a fraction up to 4 mm in the amount of not more than 30% of the dry mixture and additives improving selected parameters in the amount of not more than 5% of the dry mixture;

Concrete, as used in the present invention, means a mixture of water, cement binder in the amount of not less than 15% of the dry mixture, natural and broken down aggregates such as, for example, sand with gravel, in the amount of not more than 85% and additives improving selected parameters in the amount of not more than 5% of the dry mixture;

Dry cement-based ceramic compositions, named also as dry cement composition, as used in the present invention, means a mixture of binder with some additional ingredients such as aggregates and/or other typical additives like reinforcement fibres, etc;. Dry cement-based ceramic composition mixed with water provide concrete or mortar or paste.

Composite material or composite, as used in the present invention, means a material with a heterogeneous structure, consisting of two or more components (phases) with different properties. Exemplary of composite materials are aluminum and concrete structures;

Cement composite, as used in the present invention, means composite, wherein at least one component (phase) is cement;

Binder, as used in the present invention, means a substance that sets, hardens, and adheres to other materials to bind them together.

Calcite, as used in the present invention, includes all forms of $CaCO_3$ and its polymorphs such as Aragonite and Vaterite, it can be either grounded calcium carbonate (GCC) or precipitated calcium carbonate (PCC), used alone or in combination thereof. The $CaCO_3$ decomposes at ca 850°C to form CaO and $CO_2$. The $CO_2$ gas has lower thermal conductivity than air at high temperatures, it improves thermal insulation. At temperature > 1200°C, the CaO reacts with cement and mica to form required refractory phases. Preferred average particle size ranges up to 200 $\mu$m.

High alumina bauxite, as used in the present invention, means a bauxite with aluminum oxide content above 35-52 % by total bauxite weight.

Reinforcement, as used in the present invention, means any material that is added to composition that might influence and increase mechanical strength of the structures obtained from this composition, such as for example dispersed fibreglass or mineral wool. The examples of reinforcement materials useful according to present invention are mineral wool acc. to PN-EN 13501 A1/A2.

Reinforcement flood or insert, as used in the present invention, means a reinforcement flood as dedicated infill form for combining with container facade aluminum profile or an insert as dedicated bar to aluminum profiles such as doors, windows and partitions.

## Disclosure of the invention

Present invention relates to dry cement-based ceramic composition for preparing a cooling material for reinforcement flood or insert for aluminum systems, comprising:

- cement binder in the amount of not less than 15% by weight of total dry composition, and an additives such as aggregates in the amount of not more than 85% by weight of total dry composition and
- other additives such as fibres, micronized silica, gypsum, air entrainer, processing aid, foaming agents in the total amount of not more than 5% by weight of total dry composition with proviso, that the total amount of all additives is not higher than 85% by weight of total dry composition

wherein cement binder comprises Cement Binder type A and Cement Binder type B which is Calcium Sulfoaluminate Cement (CSA) and wherein the content of Cement Binder type A is in range from 0 to 75% of the total cement binder present in the composition and the content of Calcium Sulfoaluminate Cement is in range from 25% to 100% of the total cement binder present in the composition.

Preferably, the amount of cement binder is in the range from 70% to 90% by weight of total dry composition, preferably in the amount of 80% by weight of total dry composition, and the amount of additives is in the range from 10% to 30% by weight of total dry composition, preferably in the amount of 20% by weight of total dry composition.

In another preferred embodiment, the amount of calcium sulfoaluminate cements (CSA) is in the range from 25% to 75% of total cement binder present in the composition, preferably from 40% to 60% of total cement binder present in the composition.

Most preferably, the amount of calcium sulfoaluminate cements (CSA) is 20% or 25% or 30% or 35% or 40% or 45% or 50% or 55% or 60% or 65% or 70% or 75% or 100% of total cement binder present in the composition, preferably the amount of calcium sulfoaluminate cements (CSA) is 25% or 50% or 100% of total cement binder present in the composition, most preferably the amount of calcium sulfoaluminate cements (CSA) is 25% or 50% or 100%.

Preferably, Cement Binder type A is Ordinary Portland Cement (OPC) selected from the group consisting of Portland cement (CEM I), Portland composite cement (CEM II), metacrystal slag cement (CEM III), pozzolan cement (CEM IV), other composite cement (CEM V), and combinations thereof, preferably the Cement Binder type A is Ordinary Portland Cement (OPC) such as Portland cement (CEM I) or Portland composite cement (CEM II).

Preferably, the aggregate is present in the amount of not more than 30% by weight of total dry composition, preferably in the amount of not more than 30% by weight of total dry composition, more preferably in the amount in the range from 15% to 25% by weight of total dry composition, most preferably in the amount of 19-21% and is selected from the group consisting of high alumina bauxite, calcite and basalt, more preferably aggregate is high alumina bauxite or calcite, most preferably aggregate is basalt.

According to preferred embodiment of present invention micronized silica is present in the composition in the amount from 1 to 2%, preferably in amount of 2% and has medium particle size diameter of about 4mm.

Preferably, fibres, if present in the composition, are glass or ceramic fibres, preferably ceramic fibres consisting of $Al_2O_3$ and $SiO_2$ and the average fibre length is between 3-4,5 mm.

In the preferred embodiment of the composition according to present invention processing aid is selected from the group consisting of retarders, setting accelerators, superplasticizers, pumping aids, water retention agents, thixotropic agents, water reduction agents, atom activators and mixture thereof and such processing aid is present in the amount from 1 to 2%, preferably in amount of 2%.

Preferably, dry cement-based ceramic composition according to the present invention comprises:

- 15 to 80%, preferably 25 to 60% by weight of total dry composition of Calcium Sulfoaluminate Cement (CSA),
- 0 to 45%, preferably 15 to 45% by weight of total dry composition of Ordinary Portland Cement (OPC),
- 2-20% by weight of total dry composition of aggregator,
- 2-10% by weight of total dry composition micronized silica,
- 0,1-10% by weight of total dry composition fibres,
- 0,1-5% by weight of total dry composition processing aids,
- 0,01-5% by weight of total dry composition of air-entraining agent.

Preferably, such composition additionally comprises 1-20 % by weight of gypsum.

Present invention provides also a reinforcement flood or insert for aluminum or steel systems that is made by a) mixing the dry cement-based ceramic composition of the invention with water to obtain slurry to produce a slurry, wherein water/cement ratio is between 0,20 to 0,70, preferably between 0,40-0,60, most preferably water/cement ratio is 0,50 and further b) casting and c) hardening of such slurry. Preferably, casting step b) comprises forming process realized by pressure filtration method, a slurry method or the Magnani process. Preferably, in case of reinforcement flood the slurry is hardened inside an aluminum or stell profiles of aluminum or stell system respectively.

Additionally, present invention relates to the method of providing fire protection of aluminum system, comprising the steps of:

- mixing the dry cement-based ceramic composition of the invention with water to produce mortar or concrete mixture;
- introducing such mortar or concrete mixture into mould, preferably directly into aluminum or stell profiles;
- hardening such mortar or concrete mixture introduced into a mould, preferably into aluminum or stell profiles with creation of aluminum system cooling filling;
- in case when hardening step is conducted in mould not being an aluminum or steel profile introduction of such hardened cooling filling into aluminum or steel system.

Preferably, the bulk density of the fire protection filling obtained by such method is lower than the 1500kg / m³, preferably amounts in range between 500-1000kg / m³.

Moreover, present invention provides the use of the dry cement-based ceramic composition according to present invention for preparing reinforcement flood or insert.

As it is known, the influence of gypsum creates a better environment to ettringite grown in CSA cement. Gypsum in OPC is a binding time regulator, excess of gypsum may affects the appearances on secondary ettringite with is dangerous in hardened OPC construction Preferable origin of gypsum is flue gas cleaning installations from electric and metal cast house plants as a production waste.

In the present invention presence of hydrated lime or $Ca(OH)_2$ do not have a negative influence on the main hydrated-phase formation, because the presence of additional ettringite is the only advantage. Ye'ellemit is hydrated in water environment to hydrated calcium mono sulfoaluminate C4ASH12 and aluminum trihydrate (AH3). Calcium mono-sulfoaluminate under exposure to $CaCO_3$ creates ettringite phase (C6AS3H32) and AH3. If there is $Ca(OH)_2$ then AH3 will not be created. The second important phase of CSA cement is belite (C2S), underexposure on AH3 it transits into stratlingit (C2ASH8) with a possibility of coexisting the C-S-H phase and Ca(OH)2.

$$4CaO \cdot 3Al_2O_3 \cdot SO_3 + 8CaSO_4 \cdot 2H_2O + 6Ca(OH)_2 + 74H_2O$$
$$= 3(3CaO \cdot Al_2O_3 \cdot 3CaSO_4 \cdot 12H_2O)$$

According to the present invention $CaCO_3$ is used as an aggregator. Present in the composition calcite starts thermal decomposition under 650 degree of Celsius and finishes in 850 degrees of Celsius. Under high-temperature exposure, calcite transits into phase where mass loss is around 45%.

Bauxite is used as an functional aggregator in the present invention. Bauxite, as used in the present invention, means mineral comprising of hydrated aluminum and iron oxides known as: Gibbsite, Bayerite, Boehmite, Diaspore and Goethite. Minerals decomposition start around 230 degree of Celsius. Preferable type of bauxite is high alumina bauxite (range of $Al_2O_3$ 35-52%). Under increased temperature exposure, Bauxite mass loss is around 20%.

In some cases, it is possible to use as a Fe-rich, $Al_2O_3$ and $SiO_2$ donor the concrete Red Mud Waste mixture (post-production aluminum waste). The red colour of such mixture is the effect of high-containing of iron inside. Red-mud shows pozzolanic behaviour. Addition of Red Mud into concrete creates phases as $Ca_6[Fe(OH)_6]_2(SO_4)_3 \cdot 26H_2O$ where Al atom in Ettringite is replaced by iron atom. Red mud waste adding.

Additionally, in the composition according to present invention micronized silica might be present. Mica, as used in the present invention, means a type of silicate mineral, such as for example muscovite, biotite or chlorite with average particle diameter size not greater than about 4 nm. Addition of micronized silica to an environment containing enough amount of Al2O3 can create mullite under high-temperature exposure.

Strengthening fibres according to the current invention are glass fibres, preferably ceramic fibres containing $Al_2O_3$ and $SiO_2$ (silica). Nevertheless glass fibres, as used in the present invention, might be any other glass fibre, including alkali resistant glass fibres. Their presence in the composition is important because of their function in the compositions made according to the invention. The addition of glass fibres favours increasing the bending strength of the manufactured products and the action of increased temperatures. This is particularly important when temperatures exceed the melting temperature of aluminum and, for example, part of the load is transferred from the molten aluminum profile, the filling of which was made with the use of the composition according to the invention to the reinforced concrete material constituting this filling. The vertical direction is the main direction of load in aluminum facades, and therefore it is necessary to increase the strength of the structure in this direction. Reinforcing fibres prevent the vertical tension of the filling. The preferred fibre length is 3-4.5 mm for cut fibres, although smaller and longer fibre lengths, such as 1 to 5 mm, can be used according to this invention. Preferred fibre dosing according to present invention is from 0.1 to 10 wt.-%, preferably between 1 to 3 wt. %, most preferable 2%.

Commonly used additives might be present in the compositions according the invention to facilitate mixing, slurry pumping, flowability, setting regulation, and durability. Additives can also be used in the present invention to provide better properties of the final product obtained from the composition according to present invention. Such required properties comprise, among others, time bonding regulation, temperature bonding, slurry pumping, mixing, water content reduction. They might be selected from the group comprising setting accelerator, setting retarder, super plasticizer, water retention agent, thixotropic agent, pumping aid and water repellent and can be used alone or in combination. Commonly used additives, if present in the composition, can be employed in the amount from 0.01 up to 5%, preferably in the amount from 1 to 5%.

Air entrainer and/or foaming agent might be present in the compositions according the invention to help not only mixing and slurry pumping, but also increase the frost resistance. Moreover, air entrained and/or foaming agent if used in the cement composition according to present invention help to regulate the time of bonding and to create the proper porosity structure for further applications. Higher porosity prevents micro explosions that might occur under the treatment of the product in the high-temperature. Foaming agent term, as used in the present invention, includes also foam stabilator and fly-ash activator. Tested samples show the lower density of the matrix when air entrained and the foaming agent was used. Commonly used air entrained and foaming agents can be employed in the amount from 0,01-5% preferably in the amount from 1 to 5%, most preferably in the amount from 0.01-2%.

The cement composition of the present invention is a powder mixture. When mixed with water, it forms a fire protection mortar or fire protection concrete that might be inserted or flooded into the fire-resistance aluminum systems. Depending on the proposed use, including type of the aluminum system and the shape of the profiles, into which the mortar or concrete has to be inserted or introduced, the viscosity of such mortar can be adjusted by addition of more or less water.

Typically, the water/cement ratio is between 0,20 to 0,70, preferably between 0,40-0,60, most preferably is equal 0,50. Water influence on the material matrix is very big. Amount of added aggregates determines achievement paste or mortar or concrete.

**Description of the drawings**

Present invention will be further disclosed by its examples of practical realization and illustrated on Figures, wherein:

**Fig. 1.** illustrates the schema of the method of bar samples preparation;

**Fig. 2** illustrates the change in time of the core temperature as measured in the aerated samples;

Fig. 3 illustrates the change in time of the core temperature as measured non-aerated samples;

**Fig. 4** illustrates morphology of samples before (left column) and after (right column) of heat treatment;

**Fig. 5** illustrates the change of bending and compression strength after heat treatment of both, aerated and non-aerated samples;

**Fig. 6** illustrates the variation of time required to keep a temperature in the sample core in specific range for sample bars prepared from the cement composition comprising cement, glass fires and water differing in CSA content;

**Fig. 7** illustrates the change of the core temperature of heat treated in furnace sample bar in time for sample bar comprising 100% OPC in relation to weight of total cement used in dry cement-based ceramic composition and sample bar comprising 75% OPC and 25% CSA in relation to weight of total cement used in dry cement-based ceramic composition, which dry cement-based ceramic composition contains also fibres in an amount 2% and aggregates in an amount 20%.

**Fig. 8** illustrates the variation of time required to keep a temperature in the sample core in specific range for sample bars prepared from the cement composition comprising cement, glass fires, calcite aggregate and water differing in CSA content;

**Fig. 9** illustrates the variation of time required to keep a temperature in the sample core in specific range for sample bars prepared from the cement composition comprising cement, glass fires, basalt aggregate and water differing in CSA content;

**Fig. 10** illustrates the change of the core temperature of heat treated in furnace sample bars in time for sample bars prepared from the cement composition comprising cement, reinforcement material and water differing in CSA content;

**Fig. 11** illustrates the variation of time required to keep a temperature in the sample core in specific range for sample bars prepared from the cement composition comprising cement, reinforcement material and water differing in CSA content;

**Fig. 12** illustrates the dependence of time required for achievement of 200 °C temperature in the core of sample bar in function of CSA content in the cement composition;

**Fig. 13** illustrates the change of bending strength of the samples with different OPC/CSA content in function of time of heat treatment of the samples;

**Fig. 14** illustrates the change of compression strength of the samples with different OPC/CSA content in function of time of heat treatment of the samples;

**Fig. 15** illustrates cross-sections of façade profiles;

**Fig. 16** illustrates location of thermocouples in the tested samples during the fire-resistance test;

**Fig. 17** illustrates the temperature characteristic comparison of cooling mixtures Ref 4 and Own 1 in aluminum container profiles in mullions;

**Fig. 18** illustrates the temperature characteristic comparison of cooling mixtures Ref 4 and Own 1 in steel container profiles in mullions;

**Fig. 19** illustrates the temperature characteristic comparison of cooling mixtures Ref 4 and Own 1 in aluminum container profiles in transoms;

**Fig. 20** illustrates the temperature characteristic comparison of cooling mixtures Ref 4 and Own 1 in steel container profiles in transoms;

**Fig. 21** illustrates the view on unexposed side of the tested samples after the fire-resistance test;

## Detailed description of the invention

### Example 1 - Preparation of concrete composition sample

Two exemplary test cement compositions according to the present invention and three different reference compositions are prepared by mixing the ingredients as indicated in the Table 1 below. All given parts are parts by weight.

Table 1 - Composition of dry cement-based ceramic compositions

| Ref 1 | | Ref 2 | | Ref 3 | | Inv 1-3 | | Inv 4-6 | |
|---|---|---|---|---|---|---|---|---|---|
| OPC 42,5 R | 35 | OPC 42,5 R | 36 | OPC 42,5 R | 24,3 | OPC 42,5 R | 58,75 | OPC 42,5 R | 59,5 |
| Calcite | 20 | Calcite | 20,5 | Glass fibres | 4 | CSA cement | 14,75 | CSA cement | 15,5 |
| Mica | 20 | Mica | 20,5 | Perlite | 22,3 | High alumina bauxite/ calcit e/ basalt | 18,65 | High alumina bauxite/ calcite /basalt | 19 |
| Expanded perlite | 20 | Expanded perlite | 20 | Vermiculite | 17,6 | AF | 1,90 | Processing aid s | 2 |
| Fibres | 2 | Fibres | 2 | $CaCO_3$ | 17,6 | Processing aid s | 1,95 | Glass Fibres | 2 |
| AF | 2 | Processing aids | 1 | $Al(OH)_3$ | 14,2 | Glass Fibres | 2 | Micronized silica | 2 |
| Processing aids | 1 | | | | | Micronized silica | 2 | | |
| Sum | 100 | Sum | 100 | Sum | 100 | Sum | 100 | Sum | 100 |
| AF - Air entrained and foaming agent | | | | | | | | | |

### Example 2 - Bar sample preparation

Bar samples for further testing have been prepared in accordance with the PN-85/B-04500 standard as described in "Building mortars - Physical and strength characteristics tests" Shortly, the ingredients listed in Table 1 and balanced water in the ratio of dry cement-based ceramic composition: water/cement ratio = 0,5 are mixed together to form a homogeneous cementitious mass. Later, 40 x 40 x 160 mm bar samples were made from dry cement-based ceramic composition according to PN-85/B-04500 (16) standard by pouring the mixtures of water - dry cement-based ceramic compositions into the moulds (as for example, three-hole casting moulds) to the half and subsequently filling such moulds completely with cement mixture. The product was calibrated to remove air spaces in the samples. So obtained bar samples were seasoned in accordance with PN-85/B-04500 standard in temperature 20 +/-2 °C (ambient temperature). After 28 days the bar samples were subjected to successive tests.

**Example 3** - **Bar samples preparation for testing**

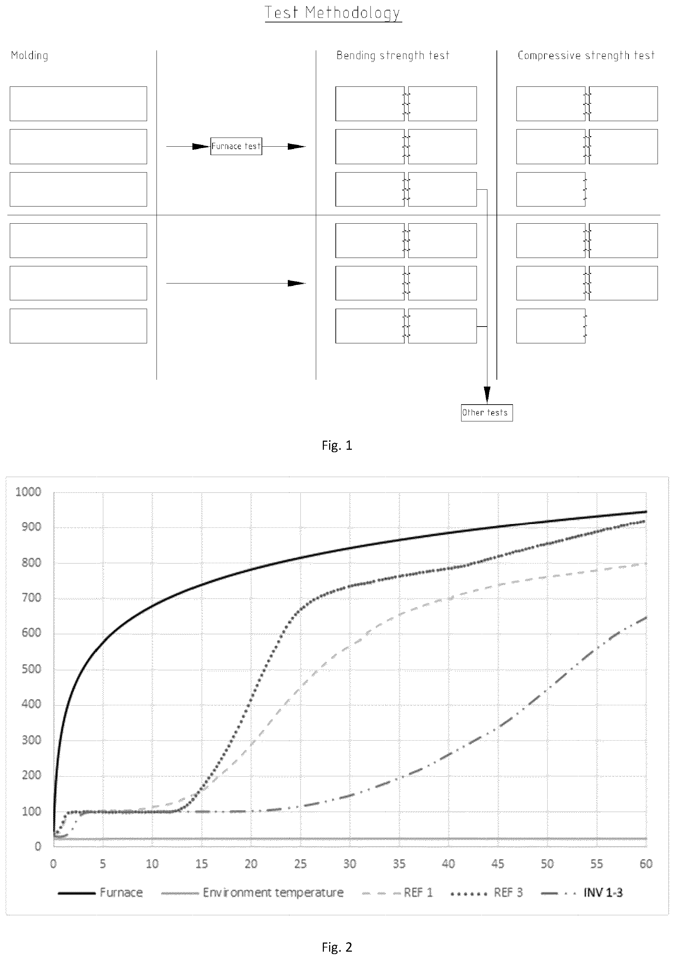

The schema illustrating the method of bar samples preparation is presented on Fig. 1.

As can be seen from the figure half of the sample bars as obtained in Example 2 were subjected for strength testing without any treatment. The remaining half were subjected for testing after 60 minutes of firing in the furnace according to the PN-EN 13501 standard. Accordingly, a hole of diameter ø 3 x 80 mm was drilled in each sample for receiving the control thermocouple and this samples were subjected to treatment in high temperature.

Subsequently, five-point furnace tests have been carried out on the samples obtained from tested compositions. The test was carried out in the furnace having following dimensions: 150 x 142 x 214 mm. The standard curve according to PN-EN 13501 standard was used to established samples behaviour.

**Example 4** - **Strength testing**

The bending and compressive strength of the samples was tested according to PN-EN 1015-11.

For almost all samples, i.e. for samples indicated as Ref 1, Ref 3, Inv 1-6, both aerated and non-aerated sample version was prepared and subjected to further analysis. In the case of sample Ref 2 the only non-aerated version was made due to the large amount of expanded filler used ensuring the low weight for such sample.

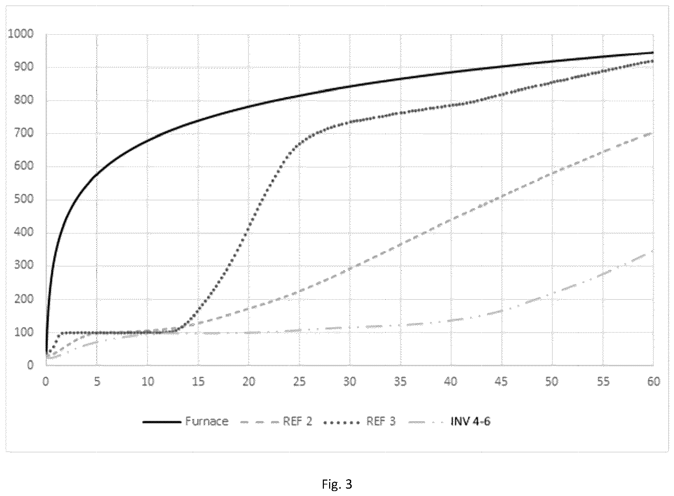

The results obtained in the furnace test are presented on the Figures 2-3, where the relation between the sample core temperature and the furnace heating temperature as a function of time is present.

As can be seen from the Figure 1 (aerated samples) and Figure 2 (non-aerated samples) the core temperature of the samples obtained with using composition according to the present invention increase slowly and, in case of non-aerated sample, critical temperature of 120°C is exceeded after more than 40 minutes. By contrast, for reference samples Ref 1 and Ref 2 the core temperature of 120°C is reached after 15 minutes only.

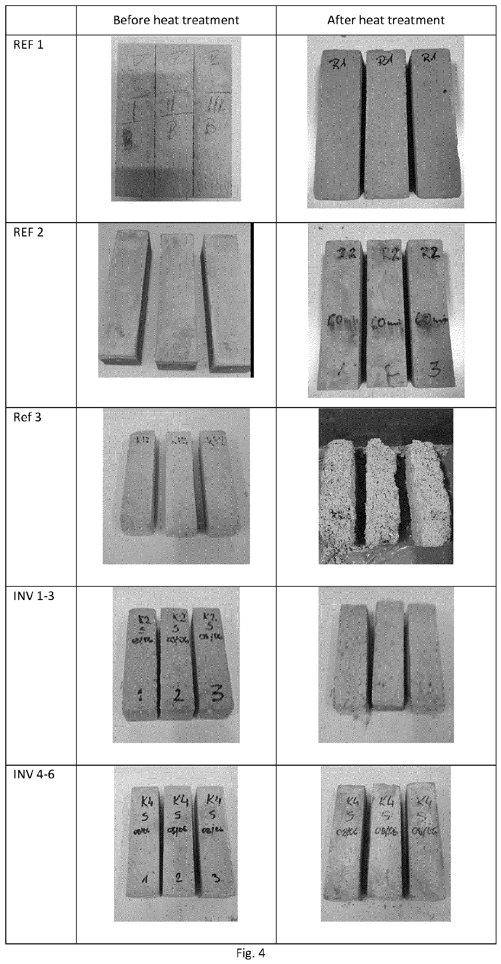

After heat treatment, the heated samples were cooled in the air of ambient. On Fig. 4 the morphology of samples before (left column) and after (right column) the heat treatment is presented. As can be seen from the Fig. 4 reference sample 3 disintegrated after heat treatment. All remaining samples maintained their original shape of the mould. In general, reference samples number 1 and 2 (REF 1, REF 2) and samples obtained from the composition according to present invention (INV 1-3, INV 4-6) maintained the cross-sectional dimensions after the temperature test that enables to test their strength according to EN 1015 standard.

Reference samples 3 (Ref 3) lost their geometry and consistency what made their strength testing impossible. Therefore, in case of reference samples 3 (Ref 3) the only samples, which has not been subjected to the fire test were then tested.

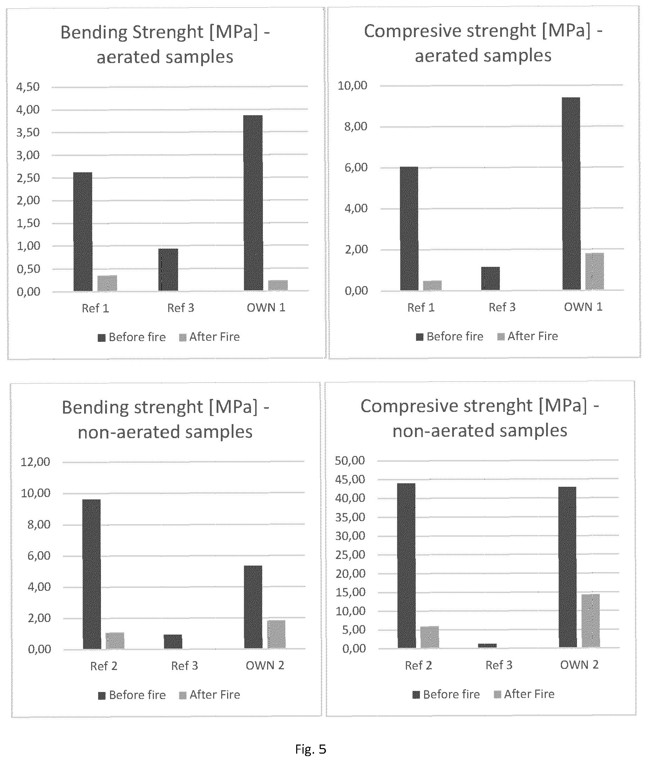

The strength tests that were carried out in accordance with PN-EN 1015-11 standard for comparison of untreated and treated in high temperature samples.. The test results are shown on Fig. 5 and obtained values are summarized in Tables 2 and 3 below. All presented data are average values calculated based on results received for at least 3 independent samples.

Table 2 - Bending and compression strength as calculated for aerated samples before and after heat treatment (HT)

| [MPa] | Before HT | | After HT | | Difference [%] | |
|---|---|---|---|---|---|---|
|  | Bendinq | Compressive | Bendinq | Compressive | Bendinq | Compressive |
| Ref 1 | 2,62 | 6,03 | 0,35 | 0,47 | -86,6% | -92,2% |
| Inv 1 - 3 | 3,86 | 9,38 | 0,22 | 1,77 | -94,2% | -81,1% |

Table 3 - Bending and compression strength as calculated for non-aerated samples before and after heat treatment (HT)

| [MPa] | Before HT | | After HT | | Difference [%] | |
|---|---|---|---|---|---|---|
|  | Bendinq | Compressive | Bendinq | Compressive | Bendinq | Compressive |
| Ref 2 | 9,60 | 43,95 | 1,05 | 5,81 | -89,0% | -86,8% |
| Ref 3 | 0,93 | 1,14 | 0,00 | 0,00 | -100,0% | -100,0% |
| Inv 4 -6 | 5,34 | 42,82 | 1,81 | 14,25 | -66,1% | -66,7% |

Additionally, density of the bars samples as well its change after heat treatment was calculated. The results are shown in Table 4 below.

Table 4 - Density and its change for as calculated for aerated and non-aerated samples

| Name | Density [kq/m³] | | Average difference [%] |
|---|---|---|---|
| | Before HT | After HT | |
| Aerated samples | | | |
| REF 1 | 869,8 | 661,5 | -23,9% |
| INV 1-3 | 845,1 | 649,7 | -23,1% |
| Non-aerated samples | | | |
| REF 2 | 1535,1 | 1079,4 | -29,7% |
| REF 3 | 743,5 | 567,7 | -23,6% |
| INV 4-6 | 1849,0 | 1283,9 | -28% |

As it is seen from the above presented results samples bar prepared from the composition according present invention (INV 1-6) have satisfactory both, mechanical and thermal properties. As satisfactory for the mortar in non-aerated state the strength at the level of 22.5 MPa is established. Similarly, for samples in aerated state the strength at the level about 7.5 MPa is acknowledged as satisfactory.

Main phases identified in this samples are ettringite (C4AS3H32), C-S-H, $Ca(OH)_2$. It has to be pointed, that after heat treatment the samples bar obtained from the composition according present invention (samples INV 1-6) have not explode due to the increase in pressure resulting from the change of the water phase inside the material as should be expected for compositions with high CSA content as known as material with higher permeability that standard Portland cements. Due to the high sulphate content, such cement is highly resistant to sulphate.

As can be seen from Fig. 5 the aerated sample obtained from the composition according to present invention INV4-6 have better compression strength parameters in the "green" state than the reference samples. It has slightly worse bending parameters than the reference sample REF 1. Nevertheless, the sample INV 4-6 in the burn state exceeded the strength parameters of the reference sample. Comparison of bending strength and compressive strength parameters for samples prepared from both tested compositions according to the invention with reference sample 1 are summarized in Tables 5-8 below.

Table 5 -Comparison of bending strength of samples REF 1 and INV 1-3

| Bending strength | | | | |
|---|---|---|---|---|
| Name | Before fire | | After fire | |
| | $f_{b1}$ | [%] | $f_{b2}$ | [%] |
| REF1 | 2,62 | 100% | 0,35 | 100% |
| INV 1-3 | 3,86 | 147% | 0,22 | 64% |

Table 6 -Comparison of compressive strength of samples REF 1 and INV 1-3

| Compressive strength | | | | |
|---|---|---|---|---|
| Name | Before fire | | After fire | |
| | $f_{c1}$ | [%] | $f_{c2}$ | [%] |
| REF 1 | 6,03 | 100% | 0,47 | 100% |
| INV 1-3 | 9,38 | 156% | 1,77 | 374% |

Table 7 -Comparison of bending strength of samples REF 2, REF 3 and INV 4-6

| Bending strength | | | | |
|---|---|---|---|---|
| Name | Before fire | | After fire | |
| | $f_{b1}$ | [%] | $f_{b2}$ | [%] |
| REF 2 | 9,60 | 100% | 1,05 | 100% |
| REF 3 | 0,93 | 10% | 0,00 | 0% |
| INV 4-6 | 5,34 | 56% | 1,81 | 172% |

Table 8 -Comparison of compressive strength of samples REF 2, REF 3 and INV 4-6

| Compressive strength | | | | |
|---|---|---|---|---|
| Name | Before fire | | After fire | |
| | $f_{c1}$ | [%] | $f_{c2}$ | [%] |
| Ref 2 | 43,95 | 100% | 5,81 | 100% |
| Ref 3 | 1,14 | 3% | 0,00 | 0% |
| INV 4-6 | 42,82 | 97% | 14,25 | 245% |

The above presented results shows, that It was found that the cement additive allowing to obtain more ettringite in the green state has a positive influence on the prolongation of temperature maintenance time in case of exposure to fire of the material.

**Example 5** - **Dependence of bar samples core temperature on the CSA cement content in case of compositions comprising cement and glass fibres**

The ability to keep the core temperature below 156 °C was also tested for compositions containing at least one additional component. These compositions were compared with the one described above and marked as REF 1.
Cement starters comprising as additive glass fibres have been obtained based on mixing compositions components as indicated below in Table 9:

Table 9 – Composition of samples comprising cement and fibres for testing the dependence of core temperature on CSA content

| Sample / Ingredient | 100% OPC | 75% OPC + 25% CSA | 50% OPC + 50% CSA | 25% OPC + 25 % CSA | 100% CSA |
|---|---|---|---|---|---|
| OPC 42,5 R | 98 | 73,5 | 49,0 | 24,5 | 0 |
| CSA cement | 0 | 24,5 | 49,0 | 73,5 | 98 |
| Fibres | 2 | 2 | 2 | 2 | 2 |
| Sum | 100 | 100 | 100 | 100 | 100 |

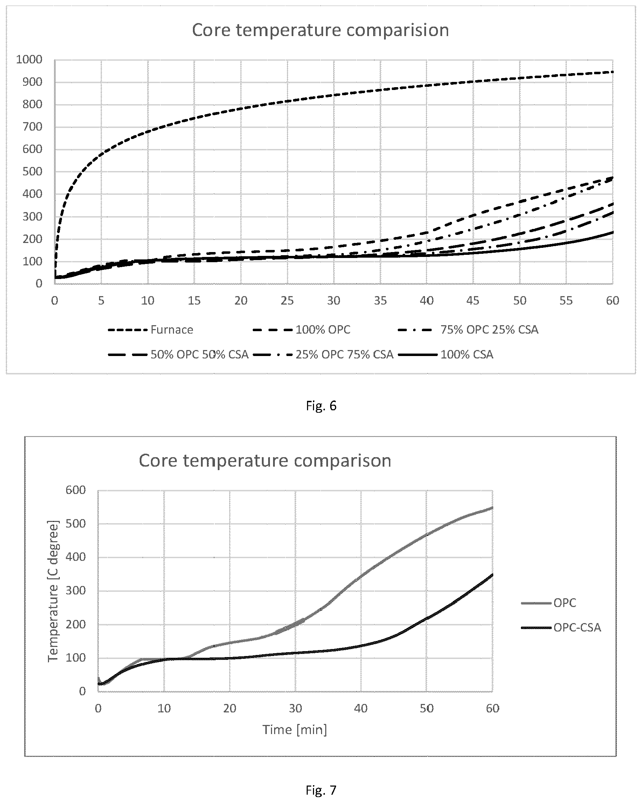

Dry compositions as prepared according to Table 9 were mixed with water/dry cement-based ceramic composition ratio =0,5.
Subsequently, bar samples were prepared as described in Examples 2 and 3 above, with the difference that mixtures of the dry composition of cement as indicated in Table 9 with water were used instead of compositions indicated in Example 1.
As can be seen from this Figure 6 the core temperature the temperature of the sample core increases the slower the higher the content of CSA cement replacing OPC cement in the sample. Moreover, obtained results confirm, that the increase in the dry cement-based ceramic composition content of CSA cement, which is a donor of the ettringite phase, significantly extends the maintenance of core temperature in the ranges of 50-96 °C and 96-150 °C and slightly decreases in the range of 150-250 °C. What is even more important, already at 25% CSA content the temperature 150 °C is reached after more than 30 minutes from beginning of heat treatment process.

**Example 6** - **Dependence of bar samples core temperature on the CSA cement content in case of compositions comprising cement, glass fibres and aggregates**

To verify the influence of the presence of aggregate in the dry cement-based ceramic composition on core temperature of bar samples additional tests were carried out with 100% OPC CEM I and 75% OPC CEM I - 25% CSA compositions, where the amount of aggregate was 20% and the amount of cut glass fibres remains 2%. As in example 5 dry compositions were mixed with water /dry cement-based ceramic composition ratio =0.5. No sample were subjected to aeration. The change of the core temperature in sample bar in time for this two samples is presented on Fig. 7.

As can be seen on Fig. 7 increasing amount of calcium aluminate-sulphate clay-sulphate phase due to partial replacing of ordinary cement OPC by CSA cement (in 25% in relation to total weight of the cement present in a dry cement-based ceramic composition) allows to obtain more favourable results in the heat treatment test. As can be seen, core temperature of the sample bar prepared with addition of CSA cement exceeds 150°C after more than 45 minutes. As it is underlined above, strength of aluminum reduces already at moderately elevated temperatures, even at 175 °C. Therefore it is so important to keep the core temperature below this point as long as it is possible, since this temperature corresponds to the temperature of whole cement based filling of aluminum profiles. As long as the internal cooling insert in the aluminum profiles is able to keep the temperature of the aluminum structures below the level at which the melting of the aluminum profiles starts, it is safe to evacuate people or animals inside the buildings/rooms.

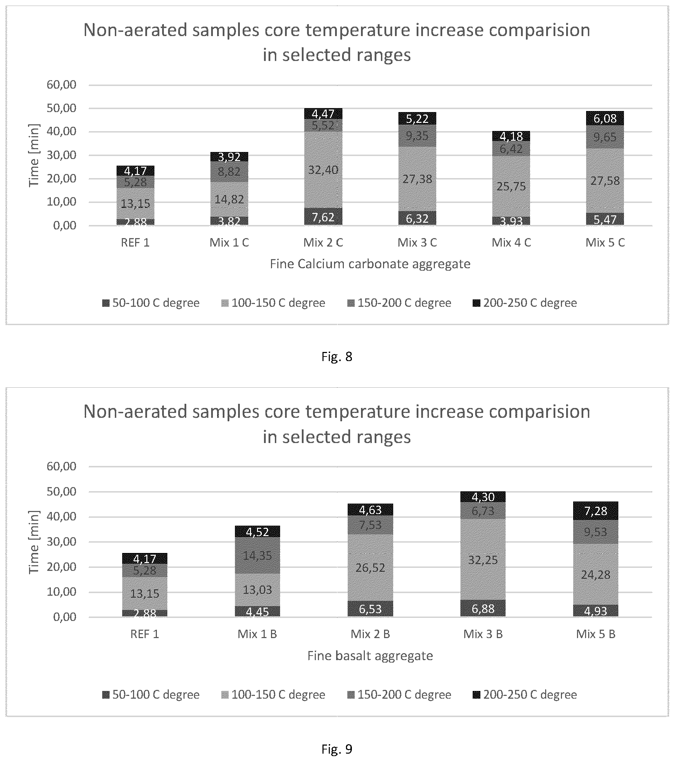

To determine the level of cooling effect of composition with addition of aggregate further test were performed for the composition with calcite aggregate addition in the amount of aggregate/dry cement-based ceramic composition ratio = 0,2. The result are presented on Fig. 8, where Mix 1 C corresponds to composition comprising 100% OPC cement, Mix 2 C corresponds to composition comprising 75% OPC with 25% CSA, Mix 3 C corresponds to composition comprising 50% OPC - 50% CSA, Mix 4 C corresponds to composition comprising 25% OPC - 75% CSA and Mix 5 C corresponds to composition comprising 100% CSA. As can be seen from Fig. 8 for samples prepared from dry cement-based ceramic composition of higher than 25% CSA content a little reduction of cooling effect in the range of 96-150 Celsius was observed. Further increase of CSA cement content in this mixture did not give any important improvement of thermal results. Nevertheless, in all cases replacement of OPC by CSA leads to a significant increase in the time needed to exceed the 150 °C core temperature. Moreover, similar tests as described above were carried out on samples obtained from dry cement with different CSA content using a basalt as an aggregate in the amount of aggregate/dry cement-based ceramic composition ratio = 0,2. The result are presented on Fig. 9, where Mix 1 B corresponds to composition comprising 100% OPC cement, Mix 2 B corresponds to composition comprising 75% OPC with 25% CSA, Mix 3 B corresponds to composition comprising 50% OPC - 50% CSA, Mix 4 B corresponds to composition comprising 25% OPC - 75% CSA and Mix 5 B corresponds to composition comprising 100% CSA. As can be seen from Fig. 9 use of 0/2 size basalt aggregate instead of calcite aggregate increases the effect of maintaining temperature in the range of up to 150 °C degrees for cement composition where CSA replace OPC in an amount in range 25%-50%. For samples prepared from dry cement-based ceramic composition of higher than 50% CSA content a little reduction of cooling effect in the range of 96-150 Celsius was observed. Nevertheless, in all cases replacement of OPC by CSA leads to a significant increase in the time needed to exceed the 150 °C core temperature.

**Example 6** - **Dependence of bar samples core temperature on the CSA cement content in case of compositions comprising cement alone**

To determine the influence of CSA addition on the ability of insert to keep the core temperature below 156 °C additional tests were performed with the un-aerated sample bars obtained from the mixture of the composition comprising cement with water.

Cement starters comprising have been obtained based on mixing compositions components as indicated below in Table 10:

Table 10 - Composition of samples comprising cement, water and reinforcement material for testing the dependence of core temperature on CSA content

| Sample number | Symbol | Gypsum | OPC | CSA | Water | Reinforcement material |
|---|---|---|---|---|---|---|
| 1 | G1 | 4400 | - | - | 2640 | 88 |

(continued)

| Sample number | Symbol | Gypsum | OPC | CSA | Water | Reinforcement material |
|---|---|---|---|---|---|---|
| 2 | Z1 | - | 4400 | - | 2200 | 88 |
| 3 | Z2 | - | 3300 | 1100 | 2200 | 88 |
| 4 | Z3 | - | 2200 | 2200 | 2200 | 88 |
| 5 | Z4 | - | 1100 | 3300 | 2200 | 88 |
| 6 | Z5 | - | - | 4400 | 2200 | 88 |

Subsequently, bar samples were prepared as described in Examples 2 and 3 above, with the difference that mixtures of the dry composition of cement as indicated in Table 10 with water were used instead of compositions indicated in Example 1.

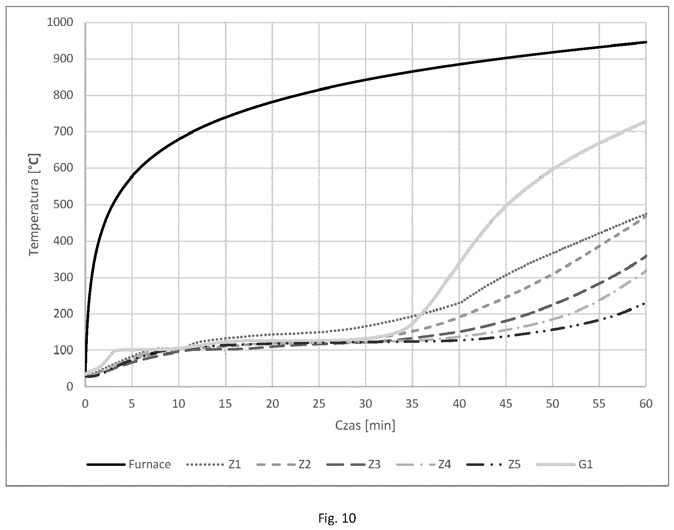

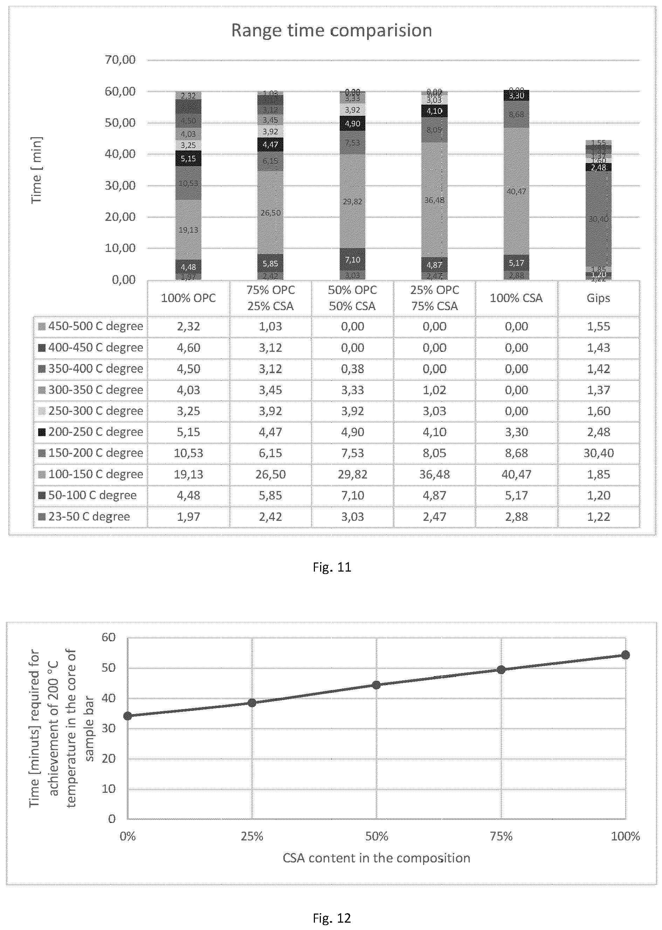

The change of the core temperature in time is presented on Fig. 10. As can be seen from this figure the temperature of the sample core increases the slower the higher is the content of CSA cement replacing OPC cement in the sample. It is also shown on Fig. 11 illustrating the variation of time required to keep a temperature in the sample core in specific range.

To determine cooling properties of the composition wherein at least part of the ordinary OPC is replaced by CSA time required to reach 200°C temperature, i.e. temperature when melting of aluminum profiles accrues, has been determined. Obtained results are presented on Fig. 12. As presented on the figure with total replacement of OPC with CSA the time that elapses until temperature 200 °C is reached increases by 20 minutes. Moreover, replacing OPC cement with CSA in only 25% by weight extends the heating period of the sample core by 10 minutes, which, apparently, can seem to be slight improvement, but in practice is extremely important change when evacuating people, animals and property from the buildings affected by the fire. Moreover, the additional 10 minutes represent almost 30% of the time that elapses until a sample without CSA reaches 200 C.

Additionally, as can be seen from this figures, compared to a traditional cooling material such as gypsum, the use of a cement filling allows for 0,5% cooling advantage. This is a slight difference, but taking into account the strength parameters replacement of gypsum with OPC provides high advantage. Nevertheless, in case of OPC cement the main transformation, which takes place, are observed within the gypsum dehydration and CSH silicate phases. Ettringite dehydration is not a significant element of the cooling effect in case of OPC cement-based composite. The influence of ettringite dehydration on cooling effect of composition is observed when OPC is at least partially replaced by CSA cement used as a donor of ettringite. The increase in CSA relative to OPC causes an improvement in cooling properties by +/- 15% for each 25% increase in CSA relative to OPC as sum of time in chosen temperature ranges. In order to confirm the occurrence of individual phases, an XRD test of reference samples - taken from half of the bent beams - was performed. Probes for XRD analysis were obtained by shaping small amounts of material from the bar sample core. The results of the analysis are presented in Table 11 below.

Table 11 - The phases [%] present in the samples determined by XRD analysis

|  | Ca(OH)2 | C-S-H | $SiO_2$ | Ettrinqite | Anhydrite |
|---|---|---|---|---|---|
| Z1 | 26 | 62 | 4 | 8 | 0 |
| Z2 | 18 | 32 | 4 | 46 | 0 |
| Z3 | 5 | 31 | 5 | 59 | 0 |
| Z4 | 1 | 13,1 | 1 | 84,9 | 0 |
| Z5 | 0 | 0 | 0 | 92,1 | 7,9 |

The test indicates an increased content of ettringite phase in samples from Z1 to Z5 to which better cooling properties of the composition material can be attributed. As the dosage of this phase's donor, CSA cement, increases, the amount of this component in the mixture increases.

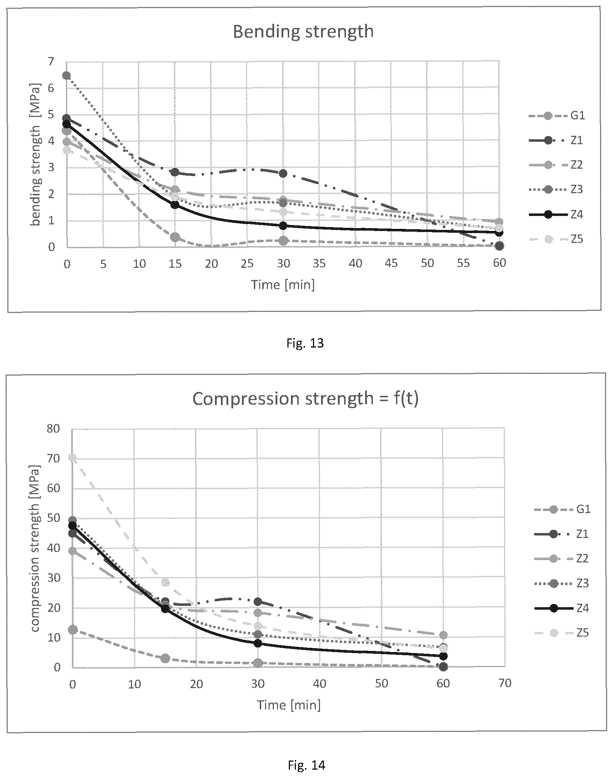

Nevertheless, since the better cooling properties of CSA cement as better properties may be related to the release of more water bound in the ettringite phase, strength tests have been carried out on samples previously heat treated. Both, bending and compression strength of bar samples has been measured with accordance to PN-EN 1015-11 standard. The result obtained in both tests are presented on Fig. 12 and Fig 13 respectively and summarized in Tables 12 and 13 below.

Table 12 - Bending strength of the samples measured after heat treatment

| Time [min] | G1 | Z1 | Z2 | Z3 | Z4 | Z5 | Unit |
|---|---|---|---|---|---|---|---|
| | 0% | 0% | 0% | 0% | 0% | 0% | |
| 0 | 4,41 | 4,87 | 3,98 | 6,49 | 4,64 | 3,67 | MPa |
| | 92% | 42% | 46% | 71% | 66% | 48% | |
| 15 | 0,37 | 2,81 | 2,16 | 1,89 | 1,60 | 1,90 | MPa |
| | 95% | 43% | 56% | 75% | 83% | 64% | |
| 30 | 0,23 | 2,75 | 1,76 | 1,65 | 0,79 | 1,32 | MPa |
| | 100% | 100% | 77% | 90% | 89% | 82% | |
| 60 | 0,00 | 0,00 | 0,90 | 0,64 | 0,51 | 0,68 | MPa |

Table 13 - Compression strength of the samples measured after heat treatment

| Time [min] | G1 | Z1 | Z2 | Z3 | Z4 | Z5 | Unit |
|---|---|---|---|---|---|---|---|
| | 0% | 0% | 0% | 0% | 0% | 0% | |
| 0 | 12,81 | 45,00 | 39,12 | 49,36 | 47,53 | 70,53 | MPa |
| | 76% | 51% | 46% | 58% | 59% | 60% | |
| 15 | 3,05 | 22,13 | 20,94 | 20,76 | 19,65 | 28,50 | MPa |
| | 89% | 51% | 53% | 78% | 83% | 80% | |
| 30 | 1,37 | 21,95 | 18,22 | 10,97 | 7,95 | 13,79 | MPa |
| | 100% | 100% | 73% | 87% | 93% | 91% | |
| 60 | 0,00 | 0,00 | 10,65 | 6,57 | 3,55 | 6,08 | MPa |

As can be seen from presented results gypsum was characterized by a sudden decrease in compression strength after 15 minutes by 76% of the initial value. After 30 minutes, the bending strength for gypsum was only 11% of the initial value and in 60 minutes the strength was 0 (the sample was disintegrated). In case of all remaining samples obtained results were satisfactory. Exposure to high temperature caused changes leading to the breaking of hydrate bonds. Therefore, the bending and compression strength of the tested samples decreased. However, and surprisingly, despite the release of chemically bound water from the ettringite phase, the strength of samples in which 100 % OPC has been replaced by CSA is still satisfactory. In combination with the excellent cooling properties of such samples that enables to keep the rise of temperature in the sample core, the compositions in which at least 25 % OPC has been replaced by CSA appear to be an excellent solution.

In order to summarize the obtained parameters of tested composition specific point classification have been proposed. The samples were evaluated according to following equation:

$$W = T_i + F_{c60} + 0,5 * F_{c30} + 0,25 * F_{c15} + F_{b60} + 0,5 * F_{b30} + 0,25 * F_{b15}$$

Where the parameters have following meanings:

$T_i$- Temperature curve behaviour (best - 6 points, worst 1 point)
$F_{c60}$- compression strength after 60 minutes (best - 6 points, worst 1 point)
$F_{c30}$- compression strength after 30 minutes (best - 6 points, worst 1 point)
$F_{c15}$ - compression strength after 15 minutes (best - 6 points, worst 1 point)
$F_{b60}$- bending strength after 60 minutes (best - 6 points, worst 1 point)
$F_{b30}$- bending strength after 30 minutes (best - 6 points, worst 1 point)
$F_{b15}$ - bending strength after 15 minutes (best - 6 points, worst 1 point)

Concrete parameters resulting from the ranking of the values obtained for each sample in the strength tests have been summarized for all tested samples in the Table 14 below:

Table 14 – Sample's parameters

| Parameter / Value | $T_i$ | $F_{c60}$ | $F_{c30}$ | $F_{c15}$ | $F_{b60}$ | $F_{b30}$ | $F_{b15}$ |
|---|---|---|---|---|---|---|---|
| 1 | Z5 | Z2 | Z1 | Z5 | Z2 | Z1 | Z1 |
| 2 | Z4 | Z3 | Z2 | Z1 | Z5 | Z2 | Z2 |
| 3 | Z3 | Z5 | Z5 | Z2 | Z3 | Z3 | Z3 |
| 4 | Z2 | Z4 | Z3 | Z3 | Z4 | Z5 | Z5 |
| 5 | Z1 | Z1 | Z4 | Z4 | Z1 | Z4 | Z4 |
| 6 | G1 | G1 | G1 | G1 | G1 | G1 | G1 |

Based on the designated parameters and above indicated equation, the samples were scored as indicated in the Table 15 below:

Table 15 - The position of the samples in the test

| Symbol | Points | Position |
|---|---|---|
| Z1 | 14,5 | 5 |
| Z2 | 18,25 | 3 |
| Z3 | 18,75 | 2 |
| Z4 | 15,25 | 4 |
| Z5 | 23,25 | 1 |
| G1 | 4,75 | 6 |

The most advantageous cooling solution is the Z5 composition, in which all OPC cement has been replaced with CSA. Nevertheless, samples Z3 and Z2 are also beneficial, and due to high cost of CSA cement more cost-efficient.

**Example 7** - **Full scale studies**

To confirm industrial applicability of the composition of the present invention additional, full-scale studies has been performed. In this study test samples of the following external dimensions were used: 3544 x 3850 mm (width x height).

To conduct the research, the composition according to the invention (0WN1) and the reference composition (Ref 4) were prepared by mixing the ingredients as indicated in the Table 1 below. Such compositions were used without any additional treatment. All parts as given in Table 16 are defined as weight parts.

Table 16 - Test samples and reference compositions

| Ref 4 | | | Own 1 | |
|---|---|---|---|---|
| OPC 42,5 R | 46,73 | | CSA cement | 57,80 |
| Calcite | 14,025 | 28,05 | Fine Basalt | 11,56 |
| Mica | 5,610 | | | |
| Expanded perlite | 8,415 | | | |
| Silica glass reinforcement fibres | 0,93 | | Silica glass reinforcement fibres | 1,16 |
| Processing aids | 0,93 | | Processing aids | 0,58 |

(continued)

| Ref 4 | | Own 1 | |
|---|---|---|---|
| Water | 23,36 | Water | 28,90 |
| Sum | 100 | Sum | 100 |

The façade assembled from standard aluminum profiles was prepared. Internal chambers of mullions and transoms were filled by reinforcement container profiles. The compositions Ref 4 and Own 1 were used to prepare the cooling inserts of container profiles. The structures of container profiles and cooling inserts are presented on Fig. 13, wherein:

Cross-section 2 and 9 illustrates aluminum container profile with cooling insert prepared from composition "Ref 4"
Cross-section 3 and 11 illustrates aluminum container profile with cooling insert prepared from composition "Own 1"
Cross-section 5 and 13 illustrates steel container profile with cooling insert prepared from composition "Ref 4"
Cross-section 6 and 14 illustrates steel container profile with cooling insert prepared from composition "Own 1"

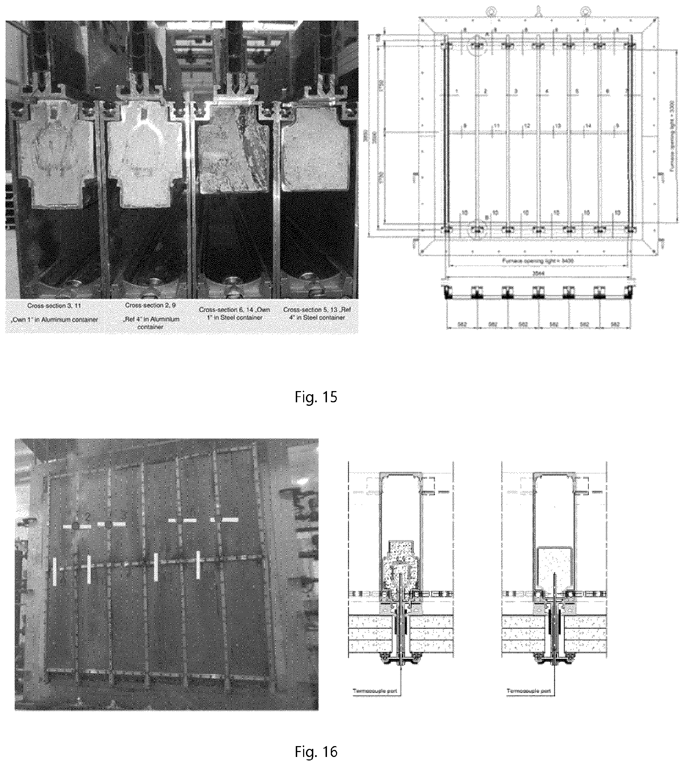

During all tests the furnace temperature was set according to PN-EN 1363:2012 fire standard curve. Temperatures in test samples were measured from unexposed surface by bare wire Type K 1200°C thermocouples placed in a holes drilled in the locations as presented on Fig. 16.

*a) Mullions reinforced by aluminum container filled by cooling compositions Own 1 and Ref 4*

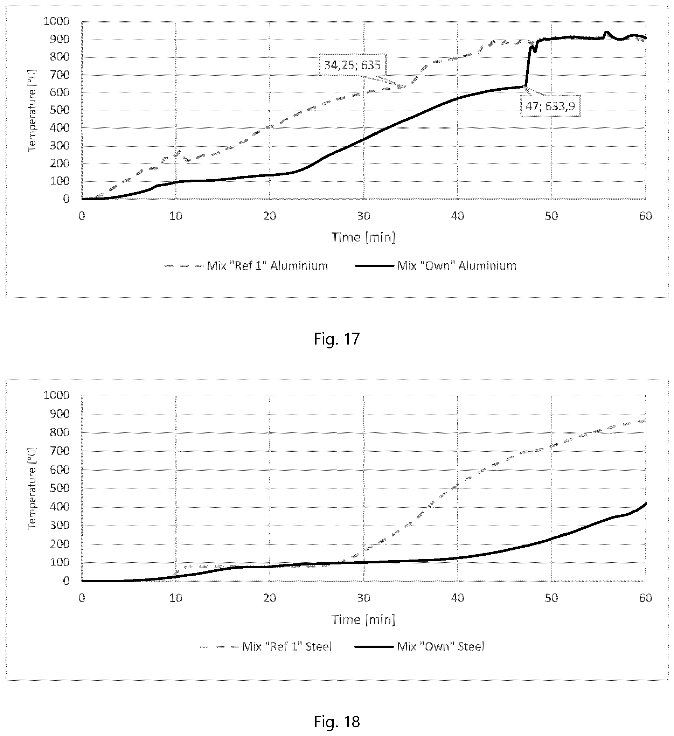

Based on the results obtained in the test concocted on mullions reinforced by aluminum container filled by cooling compositions Own 1 and Ref 4 the temperature dependence of the temperature variation inside the tested sample as a function of time in view of the furnace temperature changes was determined, what is shown on Fig. 17. The graph shows temperature courses in reinforced mullions by aluminum container filled by cooling compositions as registered during 60 minutes.

As it can be noticed from Fig. 17, for the test samples comprising the cooling inserts obtained with use of the composition according to the present invention "Own 1" the temperature inside the test samples initially, between minute 0 and minute 10, has increased. Later on, between minute 10 and 23 the temperature stayed pretty much on the same level varying between 97 and 140°C. Starting at minute 23 till minute 41 the temperature increased almost linearly. Next, between minute 41 and 47 temperature slightly rose to 644,9 °C. At minute 47 mullion has probably melted and the sample temperature increased rapidly reaching the furnace temperature.

It is worth recalling that maintaining an almost constant temperature of the tested sample between minute 10 and 23 confirms positive influence on temperature behavior of decomposition of ettringite present in the composition of the invention.

Contrary, in case of use of reference composition "Ref 4" the temperature as measured in the test samples has increased already between minute 0 and 7. Later on, in the range between 7 and 12,5 minute temperature decreased, after which, starting at minute 12,5 and ending at minute 34,25, the temperature as measured inside test samples has rapidly increased. It suggest that at this time mullion has melted and the sample temperature increased reaching the furnace temperature.

*b) Mullions reinforced by steel container filled by cooling compositions Own 1 and Ref 4*

Similar temperature behaviour was observed with respect to the façade assembled from standard profiles of mullions reinforced by container profiles made out of steel filled by compositions Own 1 and Ref 4 used to prepare the cooling inserts of container profiles. Based on obtained results the temperature dependence of the temperature variation inside the tested sample as a function of time in view of the furnace temperature changes was determined, what is shown on Fig. 18. The graph shows temperature courses in mullions reinforced by steel container filled with cooling compositions as registered during 60 minutes.

As it can be noticed from Fig. 18, for the test samples comprising the cooling inserts obtained with use of the composition according to the present invention "Own 1" the temperature inside the test samples initially, between minute 0 and minute 15, has slightly increased. Later on, between minute 15 and 40 the temperature stayed pretty much on the same level varying between 74 and 126°C. Starting at minute 40 the temperature increased almost linearly reaching the temperature of 386°C in minute 60.

Contrary, in case of use of reference composition "Ref 4" the temperature as measured in the test samples has remained almost constant between minute 10 and 27 varying between 75 to 97°C and in minute 27 has increased rapidly reaching the temperature of 866 °C in 60 minute.

*c) Transoms reinforced by aluminum container filled by cooling compositions Own 1 and Ref 4*

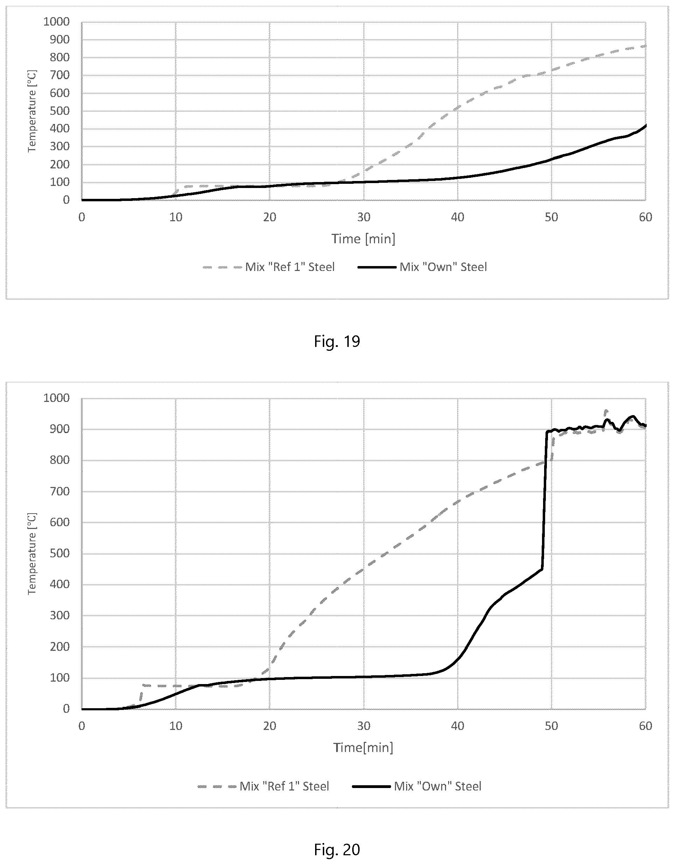

Analogues studies were carried out with façade comprising transoms reinforced by aluminium container filled by cooling compositions Own 1 and Ref 4 used to prepare the cooling inserts of container profiles. Based on obtained results the temperature dependence of the temperature variation inside the tested sample as a function of time in view of the furnace temperature changes was determined, what is shown on Fig. 19. The graph shows temperature courses in reinforced Transoms reinforced by aluminum container filled by cooling compositions as registered during 60 minutes.

As it can be noticed from Fig. 19, for the test samples comprising the cooling inserts obtained with use of the composition according to the present invention "Own 1" the temperature inside the test samples initially, between minute 0 and minute 9,5, has slightly increased to 96°C. Later on, between minute 9,5 and 21 the temperature stayed pretty much on the same level varying around 100°C. Starting at minute 21 till minute 44,5 the temperature increased almost linearly. At minute 47 the sample temperature increased rapidly reaching the furnace temperature as the transom has probably melted.

Contrary, in case of use of reference composition "Ref 4" the temperature inside the test samples initially, between minute 0 and minute 8, has slightly increased and has remained almost constant between minute 8 and 15,75 varying between 78 to 85,2°C and in minute 27 has increased reaching the temperature of 634,3 °C in 44,74 minute. At minute 44,74 the sample temperature increased rapidly reaching the furnace temperature as the transom has probably melted.

*d) Transoms reinforced by steel container filled by cooling compositions Own 1 and Ref 4*

The studies were carried out also with façade comprising transoms reinforced by steel container filled by cooling compositions Own 1 and Ref 4 used to prepare the cooling inserts of container profiles. Based on obtained results the temperature dependence of the temperature variation inside the tested sample as a function of time in view of the furnace temperature changes was determined, what is shown on Fig. 20. The graph shows temperature courses in reinforced Transoms reinforced by aluminum container filled by cooling compositions as registered during 60 minutes.

As it can be noticed from Fig. 20, for the test samples comprising the cooling inserts obtained with use of the composition according to the present invention "Own 1" the temperature inside the test samples initially, between minute 0 and minute 15, has slightly increased to temperature around 100°C. Later on, between minute 15 and 38 the temperature stayed pretty much on the same level varying around 100°C. Starting at minute 38 till minute 49 the temperature significantly increased to reach value 445°C. At minute 49 the sample temperature increased rapidly reaching the furnace temperature as the transom has probably melted.

Contrary, in case of use of reference composition "Ref 4" the temperature inside the test samples initially, between minute 0 and minute 7,5, has very slightly increased and has remained almost constant between minute 7,5 and 17,25 varying around 75°C and in minute 17,25 has increased instantly reaching the temperature of 800,00 °C in 49,5 minute. At minute 49,5 the sample temperature increased rapidly reaching the furnace temperature as the transom has probably melted.

The results as obtained confirm crucial influence of the composition of the invention on temperature behavior of reinforcement profile exposed on fire-temperature. Material able to consume more heat energy for internal phase transition is more efficient than materials without this function and is, therefore, better suited as a cooling material for building aluminum and/or steel profiles .

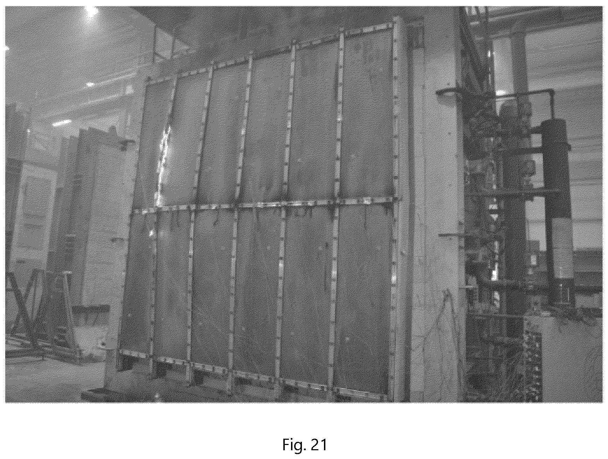

The sample turned out to be the weakest tested sample was the mullion reinforced by steel container filled by cooling compositions Ref 4. This tested sample did not meet the requirements of the fire resistance test procedure, as shown in Figure 21, .

As it is shown in the above examples, the replacement of OPC cement with green cement - CSA - leads to a mortar or concrete that can be used to fill aluminum profiles of any shape and provide excellent cooling properties for such filling. Furthermore, the filling produced based on such composition, thanks to its high compressive and bending strength, provides excellent mechanical support to aluminum structures. Since CSA is environmental friendly product the composition of the present invention seems to meet all the standards imposed in relation to environmental protection.

**Claims**

1. Dry cement-based ceramic composition for preparing a cooling material for reinforcement flood or insert for aluminum systems, comprising:

- cement binder in the amount of not less than 15% by weight of the total dry composition, and additives such as aggregates in the amount of not more than 85% by weight of the total dry composition and
- other additives such as fibres, micronized silica, gypsum, air entrainer, processing aid, foaming agents in the total amount of not more than 5% by weight of the total dry composition with proviso, that the total amount of all additives is not higher than 85% by weight of the total dry composition

**characterized in that** cement binder comprises Cement Binder type A and Cement Binder type B which is Calcium Sulfoaluminate Cement (CSA) wherein the content of Cement Binder type A is in range from 0 to 75% of the total cement binder present in the composition and the content of Calcium Sulfoaluminate Cement is in range from 25% to 100% of the total cement binder present in the composition.

2. The dry cement-based ceramic composition according to Claim 1, wherein amount of cement binder is in the range from 70% to 90% by weight of the total dry composition, preferably in the amount of 80% by weight of the total dry composition, and the amount of additives is in the range from 10% to 30% by weight of the total dry composition, preferably in the amount of 20% by weight of the total dry composition.

3. The dry cement-based ceramic composition according to Claim 1 or Claim 2, wherein the amount of calcium sulfoaluminate cements (CSA) constitutes 25% or 30% or 35% or 40% or 45% or 50% or 55% or 60% or 65% or 70% or 75% or 100% of the total cement binder present in the composition, preferably amount of calcium sulfoaluminate cements (CSA) is in the range from 25% to 75% of the total cement binder present in the composition, more preferably from 40% to 60% of the total cement binder present in the composition.

4. The dry cement-based ceramic composition according to any of previous claims, wherein the Cement Binder type A is the Ordinary Portland Cement (OPC) selected from the group consisting of Portland cement (CEM I), Portland composite cement (CEM II), metacrystal slag cement (CEM III), pozzolan cement (CEM IV), other composite cement (CEM V), and combinations thereof, preferably the Cement Binder type A is Ordinary Portland Cement (OPC) such as Portland cement (CEM I) or Portland composite cement (CEM II).

5. The dry cement-based ceramic composition according to any of previous claims, wherein the aggregate is present in the amount of not more than 30% by weight of the total dry composition, preferably in the amount of not more than 30% by weight of the total dry composition, more preferably in the amount in the range from 15% to 25% by weight of the total dry composition, most preferably in the amount of 19-21% by weight of the total dry composition and/or the aggregate is selected from the group consisting of a high alumina bauxite, a calcite and a basalt, more preferably the aggregate is a high alumina bauxite or a calcite, most preferably the aggregate is a basalt.

6. The dry cement-based ceramic composition according to any of previous claims, wherein the micronized silica is present in the amount from 1 to 2%, preferably in amount of 2% by weight of the total dry composition and preferably the micronized silica has medium particle size diameter of about 4 mm.

7. The dry cement-based ceramic composition according to any of previous claims, wherein the fibres are a glass or a ceramic fibres, preferably ceramic fibres consisting of $Al_2O_3$ and $SiO_2$ and preferably the average fibre length is between 3-4,5 mm.

8. The dry cement-based ceramic composition according to any of previous claims, wherein the processing aid is selected from the group consisting of retarders, setting accelerators, superplasticizers, pumping aids, water retention agents, thixotropic agents, water reduction agents, atom activators and mixture thereof and preferably the processing aid is present in the amount from 1 to 2%, preferably in amount of 2% by weight of the total dry composition

9. The dry cement-based ceramic composition according to any of previous claims comprising:

- 15 to 80%, preferably 25 to 60% by weight of the total dry composition, of Calcium Sulfoaluminate Cement (CSA),
- 0 to 45%, preferably 15 to 45% by weight of the total dry composition, of an Ordinary Portland Cement (OPC),
- 2 to 20% by weight of total dry composition of an aggregator,
- 2 to 10% by weight of total dry composition of a micronized silica,
- 0,1 to 10% by weight of total dry composition of fibres,
- 0,1 to 5% by weight of total dry composition of processing aids,
- 0,01 to 5% by weight of total dry composition of an air-entraining agent.

10. The dry cement-based ceramic composition according to claim 9, additionally comprising gypsum in an amount of 1-20 % by weight of the total dry composition.

11. A reinforcement flood or insert for aluminum or steel systems, characterized that is made by a) mixing the dry cement-based ceramic composition as defined in any of claims 1-10 with water to produce a slurry, wherein water/cement ratio is between 0,20 to 0,70, preferably between 0,40-0,60, most preferably water/cement ratio is 0,50 and further b) casting and c) hardening of such slurry.

12. The reinforcement flood or insert according to claim 11, wherein the casting step b) comprises process of forming that is realized by pressure filtration method, a slurry method or the Magnani process.

13. The reinforcement flood according to claims 11 or 12 wherein hardening step c) is conducted inside of an aluminum profiles of aluminum or steel system.

14. A method of providing fire protection for an aluminum or steel system, comprising the steps of:

- mixing the dry cement-based ceramic composition, as defined in any of claims 1-9, with water to produce mortar or concrete mixture;
- introducing such mortar or concrete mixture into mould, preferably directly into aluminum or steel profiles;
- hardening such mortar or concrete mixture introduced into a mould, preferably into aluminum or steel profiles with creation of aluminum or steel system cooling filling;
- in case when hardening step is conducted in mould not being an aluminum or steel profile introduction of such hardened cooling filling into aluminum or steel system.

15. The fire protection filling obtained by a method as defined in claim 14, wherein the bulk density of the product is lower than the 1500 kg/m$^3$, preferably is in the range between 500 to 1000 kg/m$^3$.

16. The use of the dry cement-based ceramic composition as defined in any of claims 1-9 for preparing reinforcement flood or insert.

## Test Methodology

| Molding | | Bending strength test | Compressive strength test |

Furnace test

Other tests

Fig. 1

Fig. 2

Fig. 3

| | Before heat treatment | After heat treatment |
|---|---|---|
| REF 1 | | |
| REF 2 | | |
| Ref 3 | | |
| INV 1-3 | | |
| INV 4-6 | | |

Fig. 4

Bending Strenght [MPa] - aerated samples

Compresive strenght [MPa] - aerated samples

Bending strenght [MPa] - non-aerated samples

Compresive strenght [MPa] - non-aerated samples

Fig. 5

Fig. 6

Fig. 7

Fig. 8

Fig. 9

Fig. 10

## Range time comparision

| | 100% OPC | 75% OPC 25% CSA | 50% OPC 50% CSA | 25% OPC 75% CSA | 100% CSA | Gips |
|---|---|---|---|---|---|---|
| 450-500 C degree | 2,32 | 1,03 | 0,00 | 0,00 | 0,00 | 1,55 |
| 400-450 C degree | 4,60 | 3,12 | 0,00 | 0,00 | 0,00 | 1,43 |
| 350-400 C degree | 4,50 | 3,12 | 0,38 | 0,00 | 0,00 | 1,42 |
| 300-350 C degree | 4,03 | 3,45 | 3,33 | 1,02 | 0,00 | 1,37 |
| 250-300 C degree | 3,25 | 3,92 | 3,92 | 3,03 | 0,00 | 1,60 |
| 200-250 C degree | 5,15 | 4,47 | 4,90 | 4,10 | 3,30 | 2,48 |
| 150-200 C degree | 10,53 | 6,15 | 7,53 | 8,05 | 8,68 | 30,40 |
| 100-150 C degree | 19,13 | 26,50 | 29,82 | 36,48 | 40,47 | 1,85 |
| 50-100 C degree | 4,48 | 5,85 | 7,10 | 4,87 | 5,17 | 1,20 |
| 23-50 C degree | 1,97 | 2,42 | 3,03 | 2,47 | 2,88 | 1,22 |

Fig. 11

Fig. 12

Fig. 13

Fig. 14

Fig. 15

Fig. 16

Fig. 17

Fig. 18

Fig. 19

Fig. 20

Fig. 21

**EP 3 896 046 A1**

Europäisches
Patentamt
European
Patent Office
Office européen
des brevets

Application Number

EP 21 16 9011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/099742 A1 (BERTRAND JACQUES [CA]) 28 September 2006 (2006-09-28) * claims 2,4,9,15,17,24,252,4,9,15,17,24,25 * | 1,3,8 | INV.<br>C04B28/06<br>C04B111/28<br>C04B28/14<br>E04B1/94 |
| X | WO 2020/043644 A1 (AKZO NOBEL COATINGS INT BV [NL]) 5 March 2020 (2020-03-05) * page 12, line 25 - page 13, line 2 * * page 15; example 3 * | 1,3,8 | E04B2/74<br>E06B3/263<br>E06B5/16 |
| A,D | KADHIM ET AL: "Structural behavior of concrete filled aluminum tubular columns", BASRAH JOURNAL FOR ENGINEERING SCIENCE, JAMI'AT AL-BASRAT * KULLIYYAT AL-HANDASAT, IRAQ , vol. 4 1 January 2012 (2012-01-01), pages 46-59, XP009529830, ISSN: 1814-6120 Retrieved from the Internet: URL:https://www.iasj.net/iasj/download/11d db3cf7b523b05 * paragraph [02.1] * | 1-16 | |
| A | EP 3 467 250 A1 (SAPA BUILDING SYSTEMS SP Z O O [PL]) 10 April 2019 (2019-04-10) * paragraph [0055] * * claim 1 * | 1 | TECHNICAL FIELDS SEARCHED (IPC)<br>C04B<br>E06B<br>E04B |
| A | US 2007/154696 A1 (ANGENENDT RAINER [DE]) 5 July 2007 (2007-07-05) * paragraphs [0005], [0064] * * example 5 * * claims 15,25 * | 1 | |

-/--

The present search report has been drawn up for all claims

| Place of search | Date of completion of the search | Examiner |
|---|---|---|
| The Hague | 10 September 2021 | Kolb, Ulrike |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

Application Number

EP 21 16 9011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 159 302 A (GREVE DALE R [US] ET AL) 26 June 1979 (1979-06-26) * claims 1-7 * ----- | 1 | |
| A | US 2018/312440 A1 (CAPPELLARI MARCO [FR] ET AL) 1 November 2018 (2018-11-01) * page 14; example 6 * * page 15; examples 7-9 * ----- | 1 | |

TECHNICAL FIELDS
SEARCHED       (IPC)

The present search report has been drawn up for all claims

| Place of search | Date of completion of the search | Examiner |
|---|---|---|
| The Hague | 10 September 2021 | Kolb, Ulrike |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 21 16 9011

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2021

| Patent document cited in search report | | Publication date | Patent family member(s) | | Publication date |
|---|---|---|---|---|---|
| WO 2006099742 | A1 | 28-09-2006 | CA | 2601570 A1 | 28-09-2006 |
| | | | EP | 1866260 A1 | 19-12-2007 |
| | | | US | 2008008541 A1 | 10-01-2008 |
| | | | US | 2010113650 A1 | 06-05-2010 |
| | | | US | 2012291951 A1 | 22-11-2012 |
| | | | US | 2013294845 A1 | 07-11-2013 |
| | | | US | 2018002228 A1 | 04-01-2018 |
| | | | US | 2019135689 A1 | 09-05-2019 |
| | | | US | 2020317570 A1 | 08-10-2020 |
| | | | WO | 2006099742 A1 | 28-09-2006 |
| WO 2020043644 | A1 | 05-03-2020 | CN | 112638841 A | 09-04-2021 |
| | | | WO | 2020043644 A1 | 05-03-2020 |
| EP 3467250 | A1 | 10-04-2019 | EP | 3467250 A1 | 10-04-2019 |
| | | | LT | 3467250 T | 10-09-2020 |
| | | | PL | 3467250 T3 | 11-01-2021 |
| US 2007154696 | A1 | 05-07-2007 | DE | 10360749 B3 | 18-08-2005 |
| | | | EP | 1697274 A1 | 06-09-2006 |
| | | | RS | 52658 B | 28-06-2013 |
| | | | US | 2007154696 A1 | 05-07-2007 |
| | | | WO | 2005063649 A1 | 14-07-2005 |
| US 4159302 | A | 26-06-1979 | NONE | | |
| US 2018312440 | A1 | 01-11-2018 | BR | 112018008654 A2 | 30-10-2018 |
| | | | CL | 2018001176 A1 | 06-07-2018 |
| | | | CN | 108349810 A | 31-07-2018 |
| | | | DE | 112016005031 T5 | 26-07-2018 |
| | | | EP | 3371127 A1 | 12-09-2018 |
| | | | ES | 2676912 A2 | 26-07-2018 |
| | | | GB | 2557859 A | 27-06-2018 |
| | | | PH | 12018500951 A1 | 19-11-2018 |
| | | | SG | 11201803739Y A | 28-06-2018 |
| | | | US | 2018312440 A1 | 01-11-2018 |
| | | | WO | 2017077246 A1 | 11-05-2017 |

EPO FORM P0459

For more details about this annex : see Official Journal of the European Patent Office, No. 12/82

## REFERENCES CITED IN THE DESCRIPTION

**Patent documents cited in the description**

- US 520123 A
- US 6139620 A
- EP 1326811 A
- CN 101863640


**Non-patent literature cited in the description**

- **MALJAARS et al.** Aluminum structures exposed to fire conditions - on overview. *HERON,* 2010, vol. 55, 85
- **MALJAARS et al.** Fire exposed aluminum structures. *HERON,* 2005, vol. 50, 261
- **KANTAUTAS A. et al.** *Composite Portland cement material for the filling of aluminum structures profiles, https://www.researchaate.net/publication/282001822*
- **SHOAIB, M.M. et al.** Effect of fire and cooling mode on the properties of slag mortars. *Cement and Concrete Research,* 2001, vol. 31, 1533-1538
- **KADHIM N.** Structural Behavior of Concrete Filled Aluminum Tubular Columns. *Basrah Journal for Engineering Science,* 2012, vol. 4, 46-59
- **E. GARTNER.** Industrially interesting approaches to "low-CO2" cements. *Cem. Concr. Res.,* 2004, vol. 34, 1489-1498
- **COPPOLA L. et al.** Binders alternative to Portland cement and waste management for sustainable construction. *Journal of Applied Biomaterials & Functional Materials,* 2018, vol. 16 (3), 186-202
- **LYON, R.E. et al.** Fire- resistant aluminosilicate composites. *Fire and Materials,* 1997, vol. 21, 67-73
- Introduction to Handbook of Alkali-activated Cements, Mortars and Concretes. **PACHECO-TORGAL F.** Handbook of Alkali-Activated Cements, Mortars and Concretes. 2015, 1-16
- **MARCHON D. et al.** Molecular design of comb-shaped polycarboxylate dispersants for environmentally friendly concrete. *Soft Matter,* 2013, vol. 9, 10719-10728
- **WINNEFELD F.** Calcium sulfoaluminate cement: on example of a low CO2 - alternative to Portland cement. *Conference Paper,* March 2010
- **COPPOLA L. et al.** Use of tartaric acid for the production of sustainable Portland-free CSA-based mortars. *Construction and Building Materials,* 2018, vol. 171, 243-249
- **JANOTKA I. et al.** The hydration phase and pore structure formation in the blends of sulfoaluminate-belite cement with Portland cement. *Cem. Concr. Res.,* 2003, vol. 33, 489-497
- **OGRODNIK P.** Eko(ogiczne betony na kruszywach odpadowych w zagadnieniach bezpieczenstwa ekip ratowniczych w warunkach pozarowych. *Logistyka,* 2014, vol. 4, 984-994
- **HAGER I. et al.** Effect of Cement Type on the Mechanical Behavior and Permeability of Concrete Subjected to High Temperatures. *Materials,* 2019, vol. 12, 3021